(19) Europäisches Patentamt
European Patent Office
Office européen des brevets

(11) EP 1 524 678 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**20.06.2018 Patentblatt 2018/25**

(51) Int Cl.:
***H01G 9/15*** *(2006.01)*

(45) Hinweis auf die Patenterteilung:
**19.08.2009 Patentblatt 2009/34**

(21) Anmeldenummer: **04023646.5**

(22) Anmeldetag: **05.10.2004**

(54) **Elektrolytkondensatoren mit polymerer Aussenschicht**

Electrolytic capacitors with polymeric outer layer

Condensateurs électrolytiques à couche polymère extérieure

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.10.2003 DE 10349112**
**07.05.2004 DE 102004022674**

(43) Veröffentlichungstag der Anmeldung:
**20.04.2005 Patentblatt 2005/16**

(73) Patentinhaber: **Heraeus Deutschland GmbH & Co. KG**
**63450 Hanau (DE)**

(72) Erfinder:
- **Merker, Udo, Dr.**
  **50679 Köln (DE)**
- **Wussow, Klaus, Dr.**
  **57250 Netphen (DE)**
- **Jonas, Friedrich, Dr.**
  **52066 Aachen (DE)**

(74) Vertreter: **Herzog, Fiesser & Partner Patentanwälte PartG mbB**
**Immermannstrasse 40**
**40210 Düsseldorf (DE)**

(56) Entgegenhaltungen:
**WO-A-03/041096**
**JP-A- 2001 102 255**
**JP-A- 2002 025 862**
**US-A- 5 766 515**
**US-A- 6 001 281**
**US-A- 6 056 899**
**US-A- 6 056 899**
**US-B1- 6 391 379**
**US-B1- 6 602 741**

- **PATENT ABSTRACTS OF JAPAN Bd. 2002, Nr. 05, 3. Mai 2002 (2002-05-03) & JP 2002 025862 A (MATSUSHITA ELECTRIC IND CO LTD), 25. Januar 2002 (2002-01-25)**

EP 1 524 678 B2

**Beschreibung**

Die Erfindung betrifft Elektrolytkondensatoren mit niedrigem äquivalenten Serienwiderstand und niedrigem Reststrom bestehend aus einem Feststoffelektrolyten aus leitfähigen Polymeren und einer äußeren Schicht enthaltend leitfähige Polymere und polymere Anionen, deren Herstellung sowie die Verwendung solcher Elektrolytkondensatoren.

Ein Feststoffelektrolytkondensator besteht in der Regel aus einer porösen Metallelektrode, einer auf der Metalloberfläche befindlichen Oxidschicht, einem elektrisch leitfähigen Feststoff, der in die poröse Struktur eingebracht wird, einer äußeren Elektrode, wie z.B. einer Silberschicht, sowie weiteren elektrischen Kontakten und einer Verkapselung.

Beispiele für Feststoffelektrolytkondensatoren sind Tantal-, Aluminium, Niob- und Nioboxidkondensatoren mit Ladungstransferkomplexen, Braunstein- oder Polymer-Feststoffelektrolyten. Die Verwendung poröser Körper hat den Vorteil, dass sich aufgrund der großen Oberfläche sehr hohe Kapazitätsdichten, d.h. hohe elektrische Kapazitäten auf kleinem Raum, erzielen lassen.

Besonders geeignet als Feststoffelektrolyte sind aufgrund ihrer hohen elektrischen Leitfähigkeit π-konjugierte Polymere. π-konjugierte Polymere werden auch als leitfähige Polymere oder als synthetische Metalle bezeichnet. Sie gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte π-konjugierte Polymere sind Polypyrrole, Polythiophene, Polyaniline, Polyacetylene, Polyphenylene und Poly(p-phenylen-vinylene), wobei ein besonders wichtiges und technisch genutztes Polythiophen das Poly-3,4-(ethylen-1,2-dioxy)thiophen, oft auch als Poly(3,4-ethylendioxythiophen) bezeichnet, ist, da es in seiner oxidierten Form sehr hohe Leitfähigkeiten aufweist.

Die technische Entwicklung in der Elektronik erfordert zunehmend Feststoffelektrolytkondensatoren mit sehr niedrigen Äquivalenten Serienwiderständen (ESR). Grund dafür sind beispielsweise fallende Logikspannungen, eine höhere Integrationsdichte und steigende Taktfrequenzen in integrierten Schaltkreisen. Ferner senkt ein niedriger ESR auch den Energieverbrauch, was besonders für mobile, batteriebetriebene Anwendungen vorteilhaft ist. Es besteht daher der Wunsch, den ESR von Feststoffelektrolytkondensatoren möglichst weit zu reduzieren.

In der europäischen Patentschrift EP-A 340 512 wird die Herstellung eines Feststoffelektrolyten aus 3,4-Ethylen-1,2-dioxythiophen und die Verwendung seines durch oxidative Polymerisation hergestellten, kationischen Polymeren als Feststoffelektrolyt in Elektrolytkondensatoren beschrieben. Poly(3,4-ethylendioxythiophen) als Ersatz von Mangandioxid oder von Ladungstransferkomplexen in Feststoffelektrolytkondensatoren senkt aufgrund der höheren elektrischen Leitfähigkeit den äquivalenten Serienwiderstand des Kondensators und verbessert das Frequenzverhalten.

Neben einem niedrigen ESR erfordern moderne Feststoffelektrolytkondensatoren einen niedrigen Reststrom und eine gute Stabilität gegenüber externen Belastungen. Insbesondere während des Herstellungsprozesses treten bei der Verkapselung der Kondensatoranoden hohe mechanische Belastungen auf, die den Reststrom der Kondensatoranode stark erhöhen können.

Stabilität gegenüber solchen Belastungen und damit ein geringer Reststrom lassen sich vor allem durch eine ca. 5-50 μm dicke Außenschicht aus leitfähigen Polymeren auf der Kondensatoranode erzielen. Eine solche Schicht dient als mechanischer Puffer zwischen der Kondensatoranode und der kathodenseitigen Elektrode. Dadurch wird verhindert, dass die Elektrode z.B. bei mechanischer Belastung mit der Anode in direkten Kontakt kommt oder diese beschädigt und sich dadurch den Reststrom des Kondensators erhöht. Die leitfähige polymere Außenschicht selbst weist ein sogenanntes Selbstheilungsverhalten auf: Kleinere Defekte im Dielektrikum an der äußeren Anodenoberfläche, die trotz der Pufferwirkung auftreten, werden dadurch elektrisch isoliert, dass die Leitfähigkeit der Außenschicht an der Defektstelle durch den elektrischen Strom zerstört wird.

Die Bildung einer dicken Außenschicht mittels einer in-situ Polymerisation ist sehr schwierig. Die Schichtbildung bedarf dabei sehr vieler Beschichtungszyklen. Durch die große Anzahl an Beschichtungszyklen ist die Außenschicht sehr inhomogen, insbesondere die Kanten der Kondensatoranode werden oftmals unzureichend belegt. Die japanische Patentanmeldung JP-A 2003-188052 beschreibt, dass homogene Kantenbelegung eine aufwendige Abstimmung der Prozessparameter erfordert. Dies macht den Herstellungsprozess jedoch sehr anfällig gegenüber Störungen. Ein Zusatz von Bindermaterialien zum schnelleren Schichtaufbau ist ebenfalls schwierig, da die Bindermaterialien die oxidative in-situ-Polymerisation behindern. Zudem muss die in-situ polymerisierte Schicht in der Regel durch Waschung von Restsalzen befreit werden, wodurch Löcher in der Polymerschicht entstehen.

Eine dichte Außenschicht mit guter Kantenbelegung kann durch elektrochemische Polymerisation erreicht werden. Die elektrochemische Polymerisation erfordert jedoch, dass zunächst ein leitfähiger Film auf der isolierenden Oxidschicht der Kondensatoranode abgeschieden wird und diese Schicht dann für jeden einzelnen Kondensator elektrisch kontaktiert wird. Diese Kontaktierung ist in der Massenfertigung sehr aufwendig und kann die Oxidschicht beschädigen.

Die Verwendung von Formulierungen, die das Pulver eines leitfähigen Polymers und Binder enthalten, haben aufgrund hoher Kontaktwiderstände zwischen den einzelnen Pulverteilchen einen zu hohen elektrischen Widerstand,

als dass sie die Herstellung von Feststoffelektrolytkondensatoren mit niedrigem ESR ermöglichen.

In den japanischen Patentanmeldungen JP-A 2001-102255 und JP-A 2001-060535 wird zum Schutz des Oxidfilms und der besseren Adhäsion des Feststoffelektrolyten an den Oxidfilm eine Schicht aus Polyethylendioxythiophen/Polystyrolsulfonsäure (PEDT/PSS), auch als Polyethylendioxythiophen/Polystyrolsulfonsäure-Komplex oder PEDT/PSS-Komplex bezeichnet, direkt auf den Oxidfilm aufgebracht. Auf diese Schicht wird dann mittels in-situ Polymerisation bzw. durch Tränkung der Kondensatoranode mit Tetracyanoquinodimethan-Salz-Lösung die äußere Schicht aufgetragen. Diese Methode hat jedoch den Nachteil, dass der PEDT/PSS-Komplex nicht in poröse Anodenkörper mit kleinen Poren eindringt. Dadurch können moderne, hochporöse Anodenmaterialien nicht verwendet werden.

US-P 6,001,281 und US-P 6,056,899 beschreiben in den Beispielen Kondensatoren mit einem Feststoffelektrolyten aus in-situ hergestelltem Polyethylendioxythiophen (PEDT) und einer äußeren Schicht aus PEDT/PSS-Komplex. Nachteilig an diesen Kondensatoren gemäß US-P 6,001,281 ist jedoch, dass sie einen hohen ESR von 130 mΩ und größer aufweisen.

Es besteht somit weiterhin Bedarf an Feststoffelektrolytkondensatoren mit niedrigem Äquivalenten Serienwiderstand (ESR), die eine dichte polymere Außenschicht mit guter Kantenbelegung besitzen und einen niedrigen Reststrom aufweisen. Weiterhin besteht Bedarf an einem Verfahren, solche Kondensatoren herzustellen.

Die Aufgabe bestand daher darin, solche Kondensatoren bereitzustellen.

Überraschend wurde nun gefunden, dass Feststoffelektrolytkondensatoren, die einen Feststoffelektrolyten aus einem leitfähigen Material, bevorzugt einem leitfähigen Polymer und eine Außenschicht enthaltend ein polymeres Anion, Polyaniline und/oder Polythiophene und einen polymeren organischen Binder besitzen, diese Anforderungen erfüllen.

Gegenstand der vorliegenden Erfindung ist daher ein Elektrolytkondensator enthaltend
einen porösen Elektrodenkörper eines Elektrodenmaterials
ein Dielektrikum, das die Oberfläche des Elektrodenmaterials bedeckt,
einen Feststoffelektrolyten enthaltend ein leitfähiges Material, bevorzugt ein leitfähiges Polymer, der die Dielektrikumsoberfläche ganz oder teilweise bedeckt,
eine Schicht auf der ganzen oder einem Teil der äußeren Oberfläche des mit einem Dielektrikum sowie ganz oder teilweise mit einem Feststoffelektrolyten bedeckten porösen Elektrodenkörpers enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II),

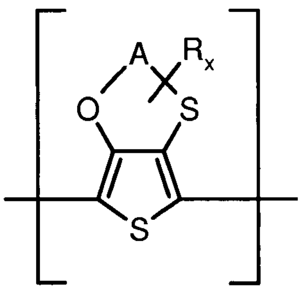 (I) 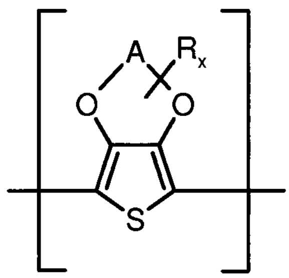 (II)

worin

A für einen gegebenenfalls substituierten $C_1$-$C_5$-Alkylenrest steht,

R für einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,

x für eine ganze Zahl von 0 bis 8 steht und

für den Fall, dass mehrere Reste R an A gebunden sind, diese gleich oder unterschiedlich sein können, dadurch gekennzeichnet, dass die Schicht enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II) wenigstens einen polymeren organischen Binder enthält.

Die allgemeinen Formeln (I) und (II) sind so zu verstehen, dass der Substituent R x-mal an den Alkylenrest A gebunden sein kann.

Das Elektrodenmaterial bildet im erfindungsgemäßen Elektrolytkondensator bevorzugt einen porösen Körper mit großer Oberfläche, z.B. in Form eines porösen Sinterkörpers oder einer aufgerauten Folie. Im Folgenden wird dieser auch kurz als Elektrodenkörper bezeichnet.

Der mit einem Dielektrikum bedeckte Elektrodenkörper wird im Folgenden auch kurz als oxidierter Elektrodenkörper bezeichnet. Die Bezeichnung "oxidierter Elektrodenkörper" umfasst auch solche Elektrodenkörper, die mit einem Dielektrikum bedeckt sind, das nicht durch Oxidation des Elektrodenkörpers hergestellt wurde.

Der mit einem Dielektrikum sowie ganz oder teilweise mit einem Feststoffelektrolyten bedeckte Elektrodenkörper wird im Folgenden auch kurz als Kondensatorkörper bezeichnet.

Die Schicht enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II), die sich auf der äußeren Oberfläche befindet, wird im Folgenden als polymere Außenschicht bezeichnet.

Die polymere Aussenschicht enthält wenigstens einen polymeren, organischen Binder. Als polymere, organische Binder kommen beispielsweise Polyvinylalkohole, Polyvinylpyrrolidone, Polyvinylchloride, Polyvinylacetate, Polyvinylbutyrate, Polyacrylsäureester, Polyacrylsäureamide, Polymethacrylsäureester, Polymethacrylsäureamide, Polyacrylnitrile, Styrol/Acrylsäureester-, Vinylacetat/Acrylsäureester- und Ethylen/Vinylacetat-Copolymerisate, Polybutadiene, Polyisoprene, Polystyrole, Polyether, Polyester, Polycarbonate, Polyurethane, Polyamide, Polyimide, Polysulfone, Melamin-Formaldehyharze, Epoxidharze, Siliconharze oder Cellulosen in Frage. Weiterhin kommen im Rahmen der Erfindung als polymere organische Binder auch solche in Frage, die durch Zugabe von Vernetzern wie beispielsweise Melaminverbindungen, verkappten Isocyanaten oder funktionellen Silanen, wie z.B. 3-Glycidoxypropyltrialkoxysilan, Tetraethoxysilan und Tetraethoxysilanhydrolysat, oder vernetzbaren Polymeren wie z.B. Polyurethanen, Polyacrylaten oder Polyolefinen und anschließende Vernetzung erzeugt werden. Solche als polymere Binder geeigneten Vernetzungsprodukte können auch beispielsweise durch Reaktion der zugegebenen Vernetzer mit den polymeren Anionen gebildet werden. Dabei übernimmt das vernetzte Polyanion in der polymeren Außenschicht dann sowohl die Funktion des polymeren Anion als auch die des polymeren organischen Binders. Kondensatoren enthaltend solche vernetzten Polyanionen sind auch als Kondensatoren im Rahmen dieser Erfindung zu verstehen. Bevorzugt sind solche polymeren organischen Binder, die eine ausreichende Temperaturstabilität aufweisen, um den Temperaturbelastungen zu widerstehen, denen die fertigen Kondensatoren später ausgesetzt werden, z.B. Löttemperaturen von 220 bis 260°C.

Der Anteil des polymerem Binders in der Außenschicht beträgt 1 - 90 %, bevorzugt 5 - 80% und ganz besonders bevorzugt 20 - 60%.

Der Begriff Polymere umfasst im Sinne der Erfindung alle Verbindungen mit mehr als einer gleichen oder unterschiedlichen Wiederholungseinheit.

Unter leitfähigen Polymeren wird hier die Verbindungsklasse der $\pi$-konjugierten Polymere verstanden, die nach Oxidation oder Reduktion eine elektrische Leitfähigkeit besitzen. Bevorzugt werden im Sinne der Erfindung solche $\pi$-konjugierten Polymere unter leitfähigen Polymeren verstanden, die nach Oxidation elektrische Leitfähigkeit besitzen.

Unter dem Präfix Poly- ist im Rahmen der Erfindung zu verstehen, dass mehr als eine gleiche oder verschiedene wiederkehrende Einheit im Polymeren bzw. Polythiophen enthalten ist. Die Polythiophene enthalten insgesamt n wiederkehrende Einheiten der allgemeinen Formel (I), (II) oder der allgemeinen Formeln (I) und (II), wobei n eine ganze Zahl von 2 bis 2000, bevorzugt 2 bis 100, ist. Die wiederkehrenden Einheiten der allgemeinen Formel (I) und/oder (II) können innerhalb eines Polythiophens jeweils gleich oder verschieden sein. Bevorzugt sind Polythiophene mit jeweils gleichen wiederkehrenden Einheiten der allgemeinen Formel(n) (I), (II) oder (I) und (II).

An den Endgruppen tragen die Polythiophene bevorzugt jeweils H.

Der Feststoffelektrolyt kann als leitfähige Polymere gegebenenfalls substituierte Polythiophene, Polypyrrole und Polyaniline enthalten.

Bevorzugte leitfähige Polymere im Sinne der Erfindung sind Polythiophene mit wiederkehrenden Einheiten der allgemeinen Formel (I), (II) oder wiederkehrenden Einheiten der allgemeinen Formel (I) und (II), worin A, R und x die oben für die allgemeinen Formeln (I) und (II) genannten Bedeutung haben.

Besonders bevorzugt sind Polythiophene mit wiederkehrenden Einheiten der allgemeinen Formel (I), (II) oder wiederkehrenden Einheiten der allgemeinen Formel (I) und (II), worin A für einen gegebenenfalls substituierten $C_2$-$C_3$-Alkylenrest und x für 0 oder 1 steht.

Ganz besonders bevorzugt als leitfähiges Polymer des Feststoffelektrolyten ist Poly(3,4-ethylendioxythiophen).

$C_1$-$C_5$-Alkylenreste A sind im Rahmen der Erfindung Methylen, Ethylen, n-Propylen, n-Butylen oder n-Pentylen. $C_1$-$C_{18}$-Alkyl steht im Rahmen der Erfindung für lineare oder verzweigte $C_1$-$C_{18}$-Alkylreste wie beispielsweise Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, $C_5$-$C_{12}$-Cycloalkyl für $C_5$-$C_{12}$-Cycloalkylreste wie beispielsweise Cyclopentyl, Cyclohexyl, Cycloheptyl, Cyclooctyl, Cyclononyl oder Cyclodecyl, $C_5$-$C_{14}$-Aryl für $C_5$-$C_{14}$-Arylreste wie beispielsweise Phenyl oder Naphthyl, und $C_7$-$C_{18}$-Aralkyl für $C_7$-$C_{18}$-Aralkylreste wie beispiels-

weise Benzyl, o-, m-, p-Tolyl, 2,3-, 2,4-, 2,5-, 2,6-, 3,4-, 3,5-Xylyl oder Mesityl. Die vorangehende Aufzählung dient der beispielhaften Erläuterung der Erfindung und ist nicht als abschließend zu betrachten.

Als gegebenenfalls weitere Substituenten der $C_1$-$C_5$-Alkylenreste A kommen zahlreiche organische Gruppen in Frage, beispielsweise Alkyl-, Cycloalkyl-, Aryl-, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Die als Feststoffelektrolyt in den erfindungsgemäßen Elektrolytkondensatoren enthaltenen Polythiophene können neutral oder kationisch sein. In bevorzugten Ausführungsformen sind sie kationisch, wobei sich "kationisch" nur auf die Ladungen bezieht, die auf der Polythiophenhauptkette sitzen. Je nach Substituent an den Resten R können die Polythiophene positive und negative Ladungen in der Struktureinheit tragen, wobei sich die positiven Ladungen auf der Polythiophenhauptkette und die negativen Ladungen gegebenenfalls an den durch Sulfonat- oder Carboxylatgruppen substituierten Resten R befinden. Dabei können die positiven Ladungen der Polythiophenhauptkette zum Teil oder vollständig durch die gegebenenfalls vorhandenen anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Gegenionen können monomere oder polymere Anionen, letztere im Folgenden auch als Polyanionen bezeichnet, sein.

Polymere Anionen können beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Bevorzugt werden für den Feststoffelektrolyten monomere Anionen eingesetzt, da diese besser in den oxidierten Elektrodenkörper eindringen.

Als monomere Anionen dienen beispielsweise solche von $C_1$-$C_{20}$-Alkansulfonsäuren, wie der Methan-, Ethan-, Propan-, Butan- oder höheren Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen $C_1$-$C_{20}$-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure oder Tetrafluoroborate, Hexafluorophosphate, Perchlorate, Hexafluoroantimonate, Hexafluoroarsenate oder Hexachloroantimonate.

Bevorzugt sind die Anionen der p-Toluolsulfonsäure, Methansulfonsäure oder Camphersulfonsäure.

Kationische Polythiophene, die zur Ladungskompensation Anionen als Gegenionen enthalten, werden in der Fachwelt auch oft als Polythiophen/(Poly-)Anion-Komplexe bezeichnet.

Neben den leitfähigen Polymeren und gegebenenfalls noch Gegenionen kann der Feststoffelektrolyt Binder, Vernetzer, oberflächenaktive Substanzen, wie z.B. ionische oder nichtionische Tenside oder Haftvermittler und/oder weitere Additive enthalten.

Haftvermittler sind beispielsweise organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltrimethoxysilan oder Octyltriethoxysilan.

Bevorzugt besteht der Feststoffelektrolyt im Wesentlichen aus dem leitfähigen Polymer und monomeren Anionen als Gegenionen.

Der Feststoffelektrolyt bildet vorzugsweise auf der Dielektrikumsoberfläche eine Schicht mit einer Dicke kleiner 200 nm, besonders bevorzugt kleiner 100 nm, ganz besonders bevorzugt kleiner 50 nm.

Die Bedeckung des Dielektrikums mit dem Feststoffelektrolyten wird im Rahmen dieser Erfindung folgendermaßen bestimmt: Die Kapazität des Kondensators wird im trockenen und feuchten Zustand bei 120 Hz gemessen. Der Bedeckungsgrad ist das Verhältnis der Kapazität im trockenen Zustand zu der Kapazität im feuchten Zustand ausgedrückt in Prozent. Trockener Zustand bedeutet, dass der Kondensator über mehrere Stunden bei erhöhter Temperatur (80-120°C) getrocknet wurde, bevor er vermessen wird. Feuchter Zustand bedeutet, dass der Kondensator über mehrere Stunden einer gesättigten Luftfeuchte bei erhöhtem Druck, beispielsweise in einem Dampfdruckkessel, ausgesetzt wird. Die Feuchtigkeit dringt dabei in Poren ein, die vom Feststoffelektrolyten nicht bedeckt sind, und wirkt dort als Flüssigelektrolyt.

Die Bedeckung des Dielektrikums durch den Feststoffelektrolyten ist vorzugsweise größer als 50 %, besonders bevorzugt größer als 70 %, ganz besonders bevorzugt größer als 80 %.

Unter äußerer Oberfläche werden die Außenseiten des Kondensatorkörpers verstanden. Auf der gesamten oder einem Teil dieser Außenflächen befindet sich erfindungsgemäß, wie schematisch und beispielhaft in Fig. 1 und Fig. 2 dargestellt, die polymere Außenschicht.

Fig. 1 beschreibt eine schematische Darstellung des Aufbaus eines Feststoffelektrolytkondensators am Beispiel eines Tantalkondensators mit

| | |
|---|---|
| 1 | Kondensatorkörper |
| 5 | polymere Außenschicht |
| 6 | Graphit/Silberschicht |
| 7 | Drahtkontakt zum Elektrodenkörper |
| 8 | Kontakte |
| 9 | Verkapselung |
| 10 | Bildausschnitt |

Fig. 2 beschreibt den vergrößerten Bildausschnitt 10 aus Fig. 1 der den schematischer Schichtaufbau des Tantalkondensators mit

| | |
|---|---|
| 10 | Bildausschnitt |
| 2 | poröser Elektrodenkörper |
| 3 | Dielektrikum |
| 4 | Feststoffelektrolyt |
| 5 | polymere Außenschicht |
| 6 | Graphit/Silberschicht |

wiedergibt.

Unter geometrischer Oberfläche wird im Folgenden die Außenfläche des Kondensatorkörpers verstanden, die sich aus den geometrischen Abmessungen ergibt. Für quaderförmige Sinterkörper beträgt die geometrische Oberfläche demnach:

$$\text{geometrische Oberfläche} = 2(L*B+L*H+B*H),$$

wobei L die Länge, B die Breite und H die Höhe des Körpers ist und * als Multiplikationszeichen steht. Dabei wird nur der Teil des Kondensatorkörpers betrachtet, auf dem sich die polymere Außenschicht befindet.

Werden mehrere Kondensatorkörper in einem Kondensator verwendet, so addieren sich die einzelnen geometrischen Oberflächen zur einer gesamten geometrischen Oberfläche.

Für Feststoffelektrolytkondensatoren, die beispielsweise eine gewickelte Folie als porösen Elektrodenkörper enthalten, werden als Maße die Abmessungen der entwickelten Folie (Länge, Breite) verwendet.

Anstelle von Feststoffelektrolyten enthaltend ein leitfähiges Polymer können die Feststoffelektrolytkondensatoren auch Feststoffelektrolyte enthaltend ein nicht polymeres leitfähiges Material, wie beispielsweise Ladungstransferkomplexe, wie z.B. TCNQ (7,7,8,8-Tetracyano-1,4-chinodimethan), Mangandioxid oder Salze, wie z.B. solche die ionische Flüssigkeiten bilden können, enthalten. Auch bei solchen Feststoffelektrolytkondensatoren führt die polymere Außenschicht zu niedrigeren Restströmen.

Für die Polythiophene mit wiederkehrenden Einheiten der allgemeinen Formel (I), (II) oder wiederkehrenden Einheiten der allgemeinen Formel (I) und (II), die sich in der polymeren Außenschicht befinden, gelten dieselben Vorzugsbereiche wie für die Polythiophene im Feststoffelektrolyten.

Als Gegenion für die Polyaniline und/oder die Polythiophene mit wiederkehrenden Einheiten der allgemeinen Formel (I), (II) oder wiederkehrenden Einheiten der allgemeinen Formel (I) und (II) kann das polymere Anion fungieren. Es können jedoch auch zusätzliche Gegenionen in der Schicht enthalten sein. Bevorzugt dient jedoch in dieser Schicht das polymere Anion als Gegenion.

Polymere Anionen können beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Bevorzugt ist als polymeres Anion ein Anion einer polymeren Carbon- oder Sulfonsäure ist.

Besonders bevorzugt als polymeres Anion ist das Anion der Polystyrolsulfonsäure (PSS).

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Polymere(s) Anion(en) und Polythiophen(e) und/oder Polyanilin(e) können in der polymeren Außenschicht in einem Gewichtsverhältnis von 0,5:1 bis 50:1, bevorzugt von 1:1 bis 30:1, besonders bevorzugt 2:1 bis 20:1 enthalten sein. Das Gewicht der Polythiophene und/oder Polyaniline entspricht hierbei der Einwaage der eingesetzten Monomere unter Annahme, dass bei der Polymerisation vollständiger Umsatz erfolgt.

Die polymere Außenschicht kann auch monomere Anionen enthalten. Für die monomeren Anionen gelten dieselben Vorzugsbereiche wie oben für den Feststoffelektrolyten aufgeführt.

Die polymere Außenschicht kann außerdem weitere Komponenten enthalten wie oberflächenaktive Substanzen, z.B. ionische und nichtionische Tenside oder Haftvermittler, wie z.B. organofunktionelle Silane bzw. deren Hydrolysate, z.B. 3-Glycidoxypropyltrialkoxysilan, 3-Aminopropyltriethoxysilan, 3-Mercaptopropyl-trimethoxysilan, 3-Metacryloxypropyltrimethoxysilan, Vinyltrimethoxysilan oder Octyltriethoxysilan.

Die Dicke der polymeren Außenschicht beträgt 1-1000 μm, bevorzugt 1-100 μm, besonders bevorzugt 2-50 μm, ganz besonders bevorzugt 4-20 μm. Die Schichtdicke kann auf der äußeren Oberfläche variieren. Insbesondere kann die Schichtdicke an den Kanten des Kondensatorkörpers dicker oder dünner als auf den Seitenflächen des Kondensatorkörpers sein. Bevorzugt wird eine nahezu homogene Schichtdicke.

Die polymere Außenschicht kann bezüglich ihrer Zusammensetzung hinsichtlich der polymeren organischen Binder, leitfähigen Polymere und polymeren Anionen eine homogene oder inhomogene Verteilung aufweisen. Bevorzugt werden homogene Verteilungen.

Die polymere Außenschicht kann Bestandteil eines Vielschichtsystems sein, das die Außenschicht des Kondensatorkörpers bildet. So können sich zwischen dem Feststoffelektrolyten und der erfindungsgemäßen polymeren Außenschicht eine oder mehrere weitere funktionelle Schichten befinden. Es können sich auch weitere funktionelle Schichten auf der erfindungsgemäßen polymeren Außenschicht befinden. Ferner können sich mehrere erfindungsgemäße polymere Außenschichten auf dem Kondensatorkörper befinden.

Bevorzugt befindet sich die polymere Außenschicht direkt auf dem Feststoffelektrolyten. Die polymere Außenschicht dringt bevorzugt in den Randbereich des Kondensatorkörpers ein, um einen guten elektrischen Kontakt zu dem Feststoffelektrolyten zu erzielen und die Haftung zum Kondensatorkörper zu erhöhen, jedoch nicht in die gesamte Tiefe aller Poren (vgl. beispielhaft Fig.2).

In einer besonders bevorzugten Ausführungsform enthält der erfindungsgemäße Elektrolytkondensator eine Feststoffelektrolyten enthaltend Poly(3,4-ethylendioxythiophen) (PEDT) und eine polymere Außenschicht enthaltend Polystyrolsulfonsäure (PSS) und Poly(3,4-ethylendioxythiophen), letzteres wird in der Literatur häufig auch als PEDT/PSS oder PEDOT/PSS bezeichnet.

In einer ganz besonders bevorzugten Ausführungsform enthält der erfindungsgemäße Elektrolytkondensator eine Feststoffelektrolyten aus Poly(3,4-ethylendioxythiophen) und monomeren Gegenionen und eine polymere Außenschicht aus PEDT/PSS und einem polymeren organischen Binder.

Weiterhin bevorzugt Gegenstand der vorliegenden Erfindung ist ein erfindungsgemäßer Elektrolytkondensator, dadurch gekennzeichnet, dass es sich bei dem Elektrodenmaterial um ein Ventilmetall oder eine Verbindung mit vergleichbaren Eigenschaften handelt.

Als Ventilmetall sind im Rahmen der Erfindung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die Oxidschicht zerstören können. Zu den Ventilmetallen zählen Be, Mg, Al, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertretern der Ventilmetalle sind Al, Ta, und Nb. Verbindungen mit vergleichbaren Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im Allgemeinen nicht als Ventilmetall betrachtet. Schichten von oxidiertem NbO weisen jedoch die typischen Eigenschaften von Ventilmetalloxidschichten auf, so dass NbO oder eine Legierung oder Verbindung von NbO mit anderen Elementen typische Beispiele für solche Verbindungen mit vergleichbaren Eigenschaften sind.

Demzufolge sind unter dem Begriff "oxidierbares Metall" nicht nur Metalle, sondern auch eine Legierung oder Verbindung eines Metalls mit anderen Elementen gemeint, sofern sie metallische Leitfähigkeit besitzen und oxidierbar sind.

Besonders bevorzugt Gegenstand der vorliegenden Erfindung ist demgemäss ein Elektrolytkondensator, dadurch gekennzeichnet, dass es sich bei dem Ventilmetall oder der Verbindung mit vergleichbaren Eigenschaften um

Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen handelt.

Das Dielektrikum besteht bevorzugt aus einem Oxid des Elektrodenmaterials. Es enthält gegebenenfalls weitere Elemente und/oder Verbindungen.

Die Kapazität des oxidierten Elektrodenkörpers hängt neben der Art des Dielektrikums von der Oberfläche und der Dicke des Dielektrikums ab. Die spezifische Ladung ist ein Maß dafür, wie viel Ladung pro Gewichtseinheit der oxidierte Elektrodenkörper aufnehmen kann. Die spezifische Ladung berechnet sich wie folgt:

**Spezifische Ladung = (Kapazität * Spannung)/ Gewicht des oxidierten Elektrodenkörpers.**

Die Kapazität ergibt sich dabei aus der Kapazität des fertigen Kondensators gemessen bei 120 Hz und die Spannung ist die Arbeitsspannung des Kondensators (rated voltage). Das Gewicht des oxidierten Elektrodenkörpers bezieht sich auf das reine Gewicht des mit Dielektrikum überzogenen porösen Elektrodenmaterials ohne Polymer, Kontakte und Verkapselungen.

Bevorzugt weisen die erfindungsgemäßen Elektrolytkondensatoren eine spezifische Ladung größer als 10000 µC/g, besonders bevorzugt größer 20000 µC/g, ganz besonders bevorzugt größer 30000 µC/g, überaus bevorzugt größer 40000 µC/g auf.

Der erfindungsgemäße Feststoffelektrolytkondensator zeichnet sich durch niedrige Restströme und niedrigem äquivalenten Serienwiderstand aus. Da die polymere Außenschicht eine dichte Schicht um den Kondensatorkörper bildet und dessen Kanten sehr gut belegt, ist der Kondensatorkörper robust gegenüber mechanischen Belastungen. Zudem zeigt die polymere Außenschicht eine gute Adhäsion zum Kondensatorkörper und eine hohe elektrische Leitfähigkeit, so dass sich niedrige äquivalente Serienwiderstände erreichen lassen.

Bevorzugter Gegenstand der vorliegenden Erfindung sind Elektrolytkondensatoren, die einen ESR gemessen bei 100 kHz von kleiner 51 mΩ aufweisen. Besonders bevorzugt ist der ESR der erfindungsgemäßen Elektrolytkondensatoren, der bei einer Frequenz von 100 kHz gemessen wird, kleiner 31 mΩ, ganz besonders bevorzugt kleiner 21 mΩ, überaus bevorzugt kleiner 16 mΩ. In besonders bevorzugten Ausführungsformen der erfindungsgemäßen Elektrolytkondensatoren ist der ESR kleiner 11 mΩ.

Der äquivalente Serienwiderstand eines Feststoffelektrolytkondensators korreliert invers mit der geometrischen Oberfläche des Kondensators. Das Produkt aus dem äquivalenten Serienwiderstand und der geometrischen Oberfläche gibt demnach eine von der Baugröße unabhängige Größe an.

Ebenfalls bevorzugt Gegenstand der vorliegenden Erfindung sind daher Elektrolytkondensatoren, bei denen das Produkt aus dem Äquivalenten Serienwiderstand gemessen bei 100 kHz und der geometrischen Oberfläche des Kondensatorkörpers kleiner 4000 mΩmm$^2$ ist. Besonders bevorzugt ist das Produkt aus dem äquivalenten Serienwiderstand und der geometrischen Oberfläche kleiner 3000 mΩmm$^2$, ganz besonders bevorzugt kleiner 2000 mΩmm$^2$, überaus bevorzugt kleiner 1000 mΩmm$^2$. In besonders bevorzugten Ausführungsformen der erfindungsgemäßen Elektrolytkondensatoren ist das Produkt aus dem äquivalenten Serienwiderstand und der geometrischen Oberfläche kleiner 600 mΩmm$^2$.

Prinzipiell wird ein solcher erfindungsgemäßer Elektrolytkondensator folgendermaßen hergestellt: Zunächst wird z.B. ein Pulver mit einer hohen Oberfläche gepresst und zu einem porösen Elektrodenkörper gesintert. Es können auch Metallfolien geätzt werden, um eine poröse Folie zu erhalten. Der Elektrodenkörper wird dann beispielsweise durch elektrochemische Oxidation, mit einem Dielektrikum, d. h. einer Oxidschicht, überzogen. Auf dem Dielektrikum wird mittels oxidativer Polymerisation chemisch oder elektrochemisch ein leitfähige Polymer abgeschieden, welches den Feststoffelektrolyten bildet. Auf den oxidierten Elektrodenkörper wird daraufhin gegebenenfalls nach Aufbringen weiterer Schichten erfindungsgemäß eine Schicht enthaltend wenigstens ein polymeres Anion und wenigstens ein gegebenenfalls substituiertes Polyanilin und/oder ein Polythiophen mit wiederkehrenden Einheiten der allgemeinen Formel (I), (II) oder wiederkehrenden Einheiten der allgemeinen Formel (I) und (II), sowie wenigstens einem polymeren organischen Binder aus einer Dispersion aufgebracht. Gegebenenfalls werden weitere Schichten auf die polymere Außenschicht aufgebracht. Ein Überzug mit gut leitfähigen Schichten, wie Graphit und Silber, oder ein metallischer Kathodenkörper dient als Elektrode zur Ableitung des Stroms. Schließlich wird der Kondensator kontaktiert und eingekapselt.

Weiterhin Gegenstand der vorliegenden Erfindung ist somit ein Verfahren zur Herstellung eines erfindungsgemäßen Elektrolytkondensators, wonach der Feststoffelektrolyt enthaltend wenigstens ein leitfähiges Polymer hergestellt wird, indem Vorstufen zur Herstellung leitfähiger Polymere, ein oder mehrere Oxidationsmittel und gegebenenfalls Gegenionen, zusammen oder nacheinander gegebenenfalls in Form von Lösungen, auf ein - gegebenenfalls mit weiteren Schichten belegtes - Dielektrikum eines porösen Elektrodenkörpers aufgebracht und chemisch oxidativ bei Temperaturen von -10°C bis 250°C polymerisiert werden, oder dass Vorstufen zur Herstellung leitfähiger Polymere und Gegenionen gegebenenfalls aus Lösung durch elektrochemische Polymerisation bei Temperaturen von -78°C bis 250°C auf einem

- gegebenenfalls mit weiteren Schichten belegten - Dielektrikum eines porösen Elektrodenkörpers polymerisiert werden, und

auf den Kondensatorkörper gegebenenfalls nach Aufbringen weiterer Schichten die Schicht enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II),

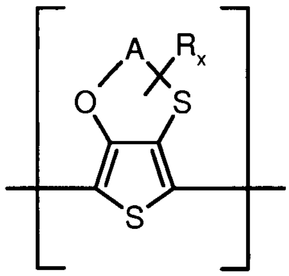

(I)

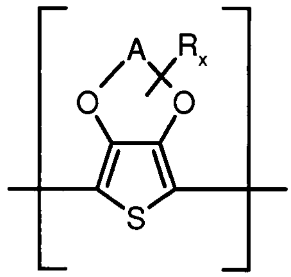

(II)

worin

A, R und x die oben für die allgemeinen Formeln (I) und (II) genannte Bedeutung haben,

und wenigstens einem polymeren organischen Binder aus einer Dispersion enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II) und wenigstens einem polymeren organischen Binder aufgebracht wird.

Als Vorstufen für die Herstellung leitfähiger Polymere, im Folgenden auch als Vorstufen bezeichnet, werden entsprechende Monomere oder deren Derivate verstanden. Es können auch Mischungen von unterschiedlichen Vorstufen verwendet werden. Geeignete monomere Vorstufen sind beispielsweise gegebenenfalls substituierte Thiophene, Pyrrole oder Aniline, bevorzugt gegebenenfalls substituierte Thiophene, besonders bevorzugt gegebenenfalls substituierte 3,4-Alkylendioxythiophene.

Als substituierte 3,4-Alkylendioxythiophene seien beispielhaft die Verbindungen der allgemeinen Formel (III), (IV) oder einer Mischung aus Thiophenen der allgemeinen Formeln (III) und (IV),

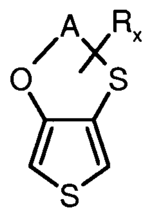

(III)

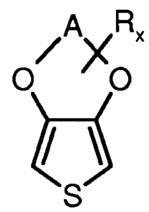

(IV)

aufgeführt,
worin

A für einen gegebenenfalls substituierten $C_1$-$C_5$-Alkylenrest, bevorzugt für einen gegebenenfalls substituierten $C_2$-$C_3$-Alkylenrest, steht,

R für einen linearen oder verzweigten, gegebenenfalls substituierten $C_1$-$C_{18}$-Alkylrest, bevorzugt linearen oder verzweigten, gegebenenfalls substituierten $C_1$-$C_{14}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest, bevorzugt gegebenenfalls substituierten $C_1$-$C_2$-Hydroxyalkylrest, oder einen Hydroxylrest steht,

x für eine ganze Zahl von 0 bis 8 steht, bevorzugt von 0 bis 6, besonders bevorzugt für 0 oder 1 steht und

für den Fall, dass mehrere Reste R an A gebunden sind, diese gleich oder unterschiedlich sein können,

Ganz besonders bevorzugte monomere Vorstufen sind gegebenenfalls substituierte 3,4-Ethylendioxythiophene.

Als substituierte 3,4-Ethylendioxythiophene seien beispielhaft die Verbindungen der allgemeinen Formel (V) genannt,

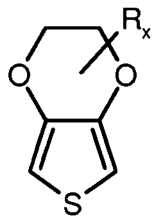

(V)

worin

R und x die für die allgemeine Formeln (III) und (IV) genannte Bedeutung haben.

Unter Derivaten dieser monomeren Vorstufen werden im Sinne der Erfindung beispielsweise Dimere oder Trimere dieser monomeren Vorstufen verstanden. Es sind auch höhermolekulare Derivate, d.h. Tetramere, Pentamere etc. der monomeren Vorstufen als Derivate möglich.

Als Derivate substituierter 3,4-Alkylendioxythiophene seien beispielhaft die Verbindungen der allgemeinen Formel (VI) genannt,

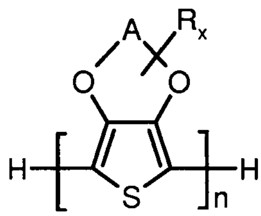

(VI)

worin

n für eine ganze Zahl von 2 bis 20, bevorzugt 2 bis 6, besonders bevorzugt für 2 oder 3 steht, und

A, R und x die für die allgemeine Formeln (III) und (IV) genannte Bedeutung haben.

Die Derivate können sowohl aus gleichen wie unterschiedlichen Monomereinheiten aufgebaut sein und in reiner Form sowie im Gemisch untereinander und/oder mit den monomeren Vorstufen eingesetzt werden. Auch oxidierte oder reduzierte Formen dieser Vorstufen sind im Sinne der Erfindung von dem Begriff "Vorstufen" umfasst, sofern bei ihrer Polymerisation die gleichen leitfähigen Polymeren entstehen wie bei den vorangehend aufgeführten Vorstufen.

Als Substituenten für die Vorstufen, insbesondere für die Thiophene, bevorzugt für die 3,4-Alkylendioxythiophene kommen die für die allgemeine Formeln (III) und (IV) für R genannten Reste in Frage.

Die $C_1$-$C_5$-Alkylenreste A und die gegebenenfalls weitere Substituenten der $C_1$-$C_5$-Alkylenreste A entsprechen den oben aufgeführten für die Polymere der allgemeinen Formeln (I) und (II).

Verfahren zur Herstellung der monomeren Vorstufen für die Herstellung leitfähiger Polymere sowie deren Derivaten sind dem Fachmann bekannt und beispielsweise in L. Groenendaal, F. Jonas, D. Freitag, H. Pielartzik & J. R. Reynolds, Adv. Mater. 12 (2000) 481 - 494 und darin zitierter Literatur beschrieben.

Die für die Herstellung der zu verwendenden Polythiophene erforderlichen 3,4-Alkylenoxythiathiophene der Formel (III) sind dem Fachmann bekannt oder nach bekannten Verfahren herstellbar (beispielsweise gemäß P. Blanchard, A. Cappon, E. Levillain, Y. Nicolas, P. Frère und J. Roncali, Org. Lett. 4 (4), 2002, S. 607 - 609).

Die leitfähigen Polymere werden auf den mit einem Dielektrikum bedeckten Elektrodenkörper durch oxidative Polymerisation von Vorstufen zur Herstellung leitfähiger Polymer erzeugt, indem man auf dem Dielektrikum des Elektrodenkörpers die Vorstufen, Oxidationsmittel und gegebenenfalls Gegenionen, vorzugsweise in Form von Lösungen, entweder getrennt nacheinander oder zusammen aufbringt und die oxidative Polymerisation, je nach Aktivität des verwendeten Oxidationsmittels, gegebenenfalls durch ein Erwärmen der Beschichtung zu Ende führt.

Die Aufbringung kann direkt oder unter Verwendung eines Haftvermittlers, beispielsweise eines Silans, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltrimethoxysilan oder Octyltriethoxysilan., und/oder einer oder mehrerer anderer funktionellen Schichten auf das Dielektrikum des Elektrodenkörpers erfolgen.

Die oxidative chemische Polymerisation der Thiophene der Formel(n) (III) oder (IV) wird je nach verwendetem Oxidationsmittel und gewünschter Reaktionszeit im Allgemeinen bei Temperaturen von -10°C bis 250°C, bevorzugt bei Temperaturen von 0°C bis 200°C, vorgenommen.

Als Lösungsmittel für die Vorstufen zur Herstellung leitfähiger Polymere und/oder Oxidationsmittel und/oder Gegenionen seien vor allem folgende unter den Reaktionsbedingungen inerten organischen Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Lösungsmittel verwendet werden.

Als Oxidationsmittel können alle dem Fachmann bekannten für die oxidative Polymerisation von Thiophenen, Anilinen oder Pyrrolen geeignete Metallsalze verwendet werden.

Geeignete Metallsalze sind Metallsalze von Haupt- oder Nebengruppenmetallen, letztere im Folgenden auch als Übergangsmetallsalze bezeichnet, des Periodensystems der Elemente. Geeignete Übergangsmetallsalze sind insbesondere Salze einer anorganischen oder organischen Säure oder organische Reste aufweisenden anorganischen Säure von Übergangsmetallen, wie z.B. von Eisen(III), Kupfer(II), Chrom(VI), Cer(IV), Mangan(IV), Mangan(VII) und Ruthenium(III).

Bevorzugte Übergangsmetallsalze sind solche des Eisen(III). Übliche Eisen(III)-Salze sind vorteilhafterweise preiswert, leicht erhältlich und können leicht gehandhabt werden, wie z.B. die Eisen(III)-Salze anorganischer Säuren, wie beispielsweise Eisen(III)halogenide (z.B. $FeCl_3$) oder Eisen(III)-Salze anderer anorganischer Säuren, wie $Fe(ClO_4)_3$ oder $Fe_2(SO_4)_3$, und die Eisen(III)-Salze organischer Säuren und organische Reste aufweisender anorganischer Säuren.

Als Eisen(III)-Salze organische Reste aufweisender anorganischer Säuren seien beispielsweise die Eisen(III)-Salze der Schwefelsäuremonoester von $C_1$-$C_{20}$-Alkanolen, z.B. das Eisen(III)-Salz des Laurylsulfates genannt.

Besonders bevorzugte Übergangsmetallsalze sind solche einer organischen Säure, insbesondere Eisen(III)-Salze organischer Säuren.

Als Eisen(III)-Salze organischer Säuren seien beispielsweise genannt: die Eisen(III)-Salze von $C_1$-$C_{20}$-Alkansulfonsäuren, wie der Methan-, Ethan-, Propan-, Butan- oder höherer Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen $C_1$-$C_{20}$-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure.

Es können auch beliebige Gemische dieser vorgenannten Eisen(III)-Salze organischer Säuren eingesetzt werden.

Die Verwendung der Eisen(III)-salze organischer Säuren und der organischen Reste aufweisenden anorganischen Säuren hat den großen Vorteil, dass sie nicht korrosiv wirken.

Ganz besonders bevorzugt als Metallsalze sind Eisen(III)-p-toluolsulfonat, Eisen(III)-o-toluolsulfonat oder einer Mischung aus Eisen(III)-p-toluolsulfonat und Eisen(III)-o-toluolsulfonat.

In bevorzugten Ausführungsformen sind die Metallsalze vor ihrem Einsatz mit einem Ionenaustauscher, vorzugsweise einem basischen Anionenaustauscher, behandelt worden. Beispiele für geeignete Ionenaustauscher sind mit tertiären Aminen funktionalisierte makroporöse Polymerisate aus Styrol und Divinylbenzol wie sie z.B. unter dem Handelnamen Lewatit® von der Bayer AG, Leverkusen vertrieben werden. Die Herstellung solcher mit einem Ionenaustauscher behandelten Metallsalze ist in DE 103 24 534 beschrieben.

Weiterhin geeignete Oxidationsmittel sind Peroxoverbindungen wie Peroxodisulfate (Persulfate), insbesondere Ammonium- und Alkaliperoxodisulfate, wie Natrium- und Kaliumperoxodisulfat, oder Alkaliperborate - gegebenenfalls in Anwesenheit katalytischer Mengen an Metallionen, wie Eisen-, Cobalt-, Nickel-, Molybdän- oder Vanadiumionen - sowie Übergangsmetalloxide, wie z.B. Braunstein (Mangan(IV)oxid) oder Cer(IV)oxid.

Für die oxidative Polymerisation der Thiophene der Formel (III) oder (IV) werden theoretisch je Mol Thiophen 2,25 Äquivalente Oxidationsmittel benötigt (siehe z.B. J. Polym. Sc. Part A Polymer Chemistry Vol. 26, S. 1287 (1988)). Es können aber auch niedrigere oder höhere Äquivalente an Oxidationsmittel eingesetzt werden. Im Rahmen der Erfindung wird je Mol Thiophen bevorzugt ein Äquivalent oder mehr, besonders bevorzugt 2 Äquivalente oder mehr Oxidationsmittel eingesetzt.

Bei getrennter Aufbringung von Vorstufen, Oxidationsmitteln und gegebenenfalls Gegenionen wird das Dielektrikum des Elektrodenkörpers vorzugsweise zunächst mit der Lösung des Oxidationsmittels und gegebenenfalls der Gegenionen und anschließend mit der Lösung der Vorstufen beschichtet. Bei der bevorzugten gemeinsamen Aufbringung von Vorstufen, Oxidationsmittel und gegebenenfalls Gegenionen wird das Dielektrikum des Elektrodenkörpers nur mit einer, nämlich einer Vorstufen, Oxidationsmittel und gegebenenfalls Gegenionen enthaltenden Lösung beschichtet.

Die Lösungen können außerdem weitere Komponenten wie ein oder mehrere in organischen Lösungsmitteln lösliche organische Binder wie Polyvinylacetat, Polycarbonat, Polyvinylbutyral, Polyacrylsäureester, Polymethacrylsäureester, Polystyrol, Polyacrylnitril, Polyvinylchlorid, Polybutadien, Polyisopren, Polyether, Polyester, Silicone, Styrol/Acrylsäureester-, Vinylacetat/Acrylsäureester- und Ethylen/Vinylacetat-Copolymerisate oder wasserlösliche Binder wie Polyvinylalkohole, Vernetzer wie Melaminverbindungen, verkappte Isocyanate, funktionelle Silane - z.B. Tetraethoxysilan, Alkoxysilanhydrolysate, z.B. auf Basis von Tetraethoxysilan, Epoxysilane wie 3-Glycidoxypropyltrialkoxysilan - Polyurethane, Polyacrylate oder Polyolefindispersionen, und/oder Additive wie z.B. oberflächenaktive Stoffe, z.B. ionische oder nichtionische Tenside oder Haftvermittler, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyl-trimethoxysilan, Vinyltrimethoxysilan, Octyltriethoxysilan. zugesetzt werden.

Die auf das Dielektrikum des Elektrodenkörpers aufzubringenden Lösungen enthalten vorzugsweise 1 bis 30 Gew.-% des Thiophens der allgemeinen Formel (III) oder der Mischung aus Thiophenen der allgemeinen Formeln (III) und (IV) und 0 bis 50 Gew.-% Bindemittel, Vernetzer und/oder Additive, beide Gewichtsprozente bezogen auf das Gesamtgewicht der Mischung.

Die Lösungen werden nach bekannten Verfahren, z.B. durch Tränkung, Gießen, Auftropfen, Spritzen, Aufsprühen, Aufrakeln, Bestreichen, Spincoating oder Bedrucken, beispielsweise Ink-jet-, Sieb-, Kontakt- oder Tampondrucken, auf das Dielektrikum des Elektrodenkörpers aufgebracht.

Das Entfernen der Lösungsmittel nach dem Aufbringen der Lösungen kann durch einfaches Abdampfen bei Raumtemperatur erfolgen. Zur Erzielung höherer Verarbeitungsgeschwindigkeiten ist es jedoch vorteilhafter, die Lösungsmittel bei erhöhten Temperaturen, z.B. bei Temperaturen von 20 bis zu 300°C, bevorzugt 40 bis zu 250°C, zu entfernen. Eine thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Polymers 5 Sekunden bis mehrere Stunden. Für die thermische Behandlung können auch Temperaturprofile mit unterschiedlichen Temperaturen und Verweilzeiten eingesetzt werden.

Die Wärmebehandlung kann z.B. in der Weise ausgeführt werden, dass man die beschichteten oxidierten Elektrodenkörper mit einer solchen Geschwindigkeit durch eine auf der gewünschten Temperatur befindliche Wärmekammer bewegt, dass die gewünschte Verweilzeit bei der gewählten Temperatur erreicht wird, oder mit einer auf der gewünschten Temperatur befindlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Nach dem Entfernen der Lösungsmittel (Trocknen) und gegebenenfalls nach der thermischen Nachbehandlung kann es vorteilhaft sein, das überschüssige Oxidationsmittel und Restsalze aus der Beschichtung mit einem geeigneten Lösungsmittel, bevorzugt Wasser oder Alkoholen, auszuwaschen. Unter Restsalzen sind hier die Salze der reduzierten Form des Oxidationsmittels und gegebenenfalls weitere vorhandene Salze zu verstehen.

Für metalloxidische Dielektrika, wie beispielsweise die Oxide der Ventilmetalle, kann es nach der Polymerisation und bevorzugt während oder nach der Waschung vorteilhaft sein, den Oxidfilm elektrochemisch nachzubilden, um eventuelle Fehlstellen im Oxidfilm auszubessern und dadurch den Reststrom des fertigen Kondensators zu senken. Bei dieser sogenannten Reformierung taucht man den Kondensatorkörper in einen Elektrolyten ein und legt eine positive Spannung an den Elektrodenkörper. Der fließende Strom bildet das Oxid an defekten Stellen im Oxidfilm nach bzw. zerstört leitfähiges Polymer an Fehlstellen, über die ein hoher Strom fließt.

Je nach Art des oxidierten Elektrodenkörpers kann es vorteilhaft sein, den oxidierten Elektrodenkörper bevorzugt nach einer Waschung weitere Male mit den Mischungen zu imprägnieren, um dickere Polymerschichten zu erzielen.

Die Polythiophene können aus den Vorstufen auch durch elektrochemische oxidative Polymerisation hergestellt werden.

Bei der elektrochemischen Polymerisation kann der mit einem Dielektrikum überzogene Elektrodenkörper zunächst mit einer dünnen Schicht eines leitfähigen Polymers beschichtet werden. Nach Anlegen einer Spannung an diese Schicht wächst die Schicht enthaltend das leitfähige Polymer darauf auf. Es können auch andere leitfähigen Schichten als Abscheidungsschicht verwendet werden. So beschreiben Y. Kudoh et al. in Journal of Power Sources 60 (1996) 157-163 die Verwendung einer Abscheidungsschicht aus Manganoxid.

Die elektrochemische oxidative Polymerisation der Vorstufen kann bei Temperaturen von -78°C bis zum Siedepunkt des eingesetzten Lösungsmittels vorgenommen werden. Bevorzugt wird bei Temperaturen von -78°C bis 250°C, besonders bevorzugt von -20°C bis 60°C elektrochemisch polymerisiert.

Die Reaktionszeiten betragen in Abhängigkeit von der verwendeten Vorstufe, dem verwendeten Elektrolyten, der gewählten Temperatur und der angewendeten Stromdichte 1 Minute bis 24 Stunden.

Sofern die Vorstufen flüssig sind, kann die Elektropolymerisation in An- oder Abwesenheit von unter den Bedingungen der Elektropolymerisation inerten Lösungsmitteln vorgenommen werden; die Elektropolymerisation von festen Vorstufen wird in Gegenwart von unter den Bedingungen der elektrochemischen Polymerisation inerten Lösungsmitteln durchgeführt. In bestimmten Fällen kann es vorteilhaft sein, Lösungsmittelgemische einzusetzen und/oder den Lösungsmitteln Lösungsvermittler (Detergentien) zuzusetzen.

Als unter den Bedingungen der Elektropolymerisation inerte Lösungsmittel seien beispielsweise genannt: Wasser; Alkohole wie Methanol und Ethanol; Ketone wie Acetophenon; halogenierte Kohlenwasserstoffe wie Methylenchlorid, Chloroform, Tetrachlorkohlenstoff und Fluorkohlenwasserstoffe; Ester wie Ethylacetat und Butylacetat; Kohlensäureester wie Propylencarbonat; aromatische Kohlenwasserstoffe wie Benzol, Toluol, Xylol; aliphatische Kohlenwasserstoffe wie Pentan, Hexan, Heptan und Cyclohexan; Nitrile wie Acetonitril und Benzonitril; Sulfoxide wie Dimethylsulfoxid; Sulfone wie Dimethylsulfon, Phenylmethylsulfon und Sulfolan; flüssige aliphatische Amide wie Methylacetamid, Dimethylacetamid, Dimethylformamid, Pyrrolidon, N-Methylpyrrolidon, N-Methylcaprolactam; aliphatische und gemischt aliphatisch-aromatische Ether wie Diethylether und Anisol; flüssige Harnstoffe wie Tetramethylharnstoff oder N,N-Dimethylimidazolidinon.

Für die Elektropolymerisation werden die Vorstufen bzw. deren Lösungen mit Elektrolytzusätzen versetzt. Als Elektrolytzusätze werden vorzugsweise freie Säuren oder übliche Leitsalze verwendet, die eine gewisse Löslichkeit in den verwendeten Lösungsmitteln aufweisen. Als Elektrolytzusätze haben sich z.B. bewährt: freie Säuren wie p-Toluolsulfonsäure, Methansulfonsäure, ferner Salze mit Alkansulfonat-, aromatischen Sulfonat-, Tetrafluoroborat-, Hexafluorophosphat-, Perchlorat-, Hexafluoroantimonat-, Hexafluoroarsenat- und Hexachloroantimonat-Anionen und Alkali-, Erdalkali- oder gegebenenfalls alkylierten Ammonium-, Phosphonium-, Sulfonium- und Oxonium-Kationen.

Die Konzentrationen der Vorstufen können zwischen 0,01 und 100 Gew.-% (100 Gew.-% nur bei flüssiger Vorstufe) liegen; bevorzugt betragen die Konzentrationen 0,1 bis 20 Gew.-%.

Die Elektropolymerisation kann diskontinuierlich oder kontinuierlich durchgeführt werden.

Die Stromdichten für die Elektropolymerisation können in weiten Grenzen schwanken; üblicherweise wird mit Stromdichten von 0,0001 bis 100 $mA/cm^2$, vorzugsweise 0,01 bis 40 $mA/cm^2$ gearbeitet. Bei diesen Stromdichten stellen sich Spannungen von etwa 0,1 bis 50 V ein.

Für metalloxidische Dielektrika kann es nach der elektrochemischen Polymerisation vorteilhaft sein, den Oxidfilm elektrochemisch nachzubilden, um eventuelle Fehlstellen im Oxidfilm auszubessern und dadurch den Reststrom des fertigen Kondensators zu senken (Reformierung).

Als Gegenionen eignen sich die oben bereits aufgeführten monomeren oder polymeren Anionen, bevorzugt diejenigen der monomeren oder polymeren Alkan- oder Cycloalkansulfonsäuren oder aromatischen Sulfonsäuren. Besonders bevorzugt zur Anwendung in den erfindungsgemäßen Elektrolytkondensatoren sind die Anionen der monomeren Alkan- oder Cycloalkansulfonsäuren oder aromatischen Sulfonsäuren, da diese enthaltende Lösungen besser geeignet sind, in das poröse mit einem Dielektrikum beschichtete Elektrodenmaterial einzudringen, und somit eine größere Kontaktfläche zwischen diesem und dem Feststoffelektrolyten gebildet werden kann. Die Gegenionen werden den Lösungen beispielsweise in Form ihrer Alkalisalze oder als freie Säuren zugegeben. Bei der elektrochemischen Polymerisation werden diese Gegenionen der Lösung oder den Thiophenen gegebenenfalls als Elektrolytzusätze oder Leitsalze zugegeben.

Außerdem können als Gegenionen die gegebenenfalls vorhandenen Anionen des verwendeten Oxidationsmittels dienen, so dass im Falle der chemischen oxidativen Polymerisation eine Zugabe zusätzlicher Gegenionen nicht zwingend erforderlich ist.

Nach Herstellung des Feststoffelektrolyten und gegebenenfalls nach Aufbringen weiterer Schichten auf den Kondensatorkörper wird die Schicht enthaltend wenigstens ein polymeres Anion und wenigstens ein gegebenenfalls substituiertes Polyanilin und/oder ein Polythiophen mit wiederkehrenden Einheiten der allgemeinen Formel (I), (II) oder wiederkehrenden Einheiten der allgemeinen Formel (I) und (II),

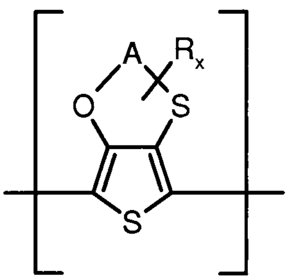
(I)

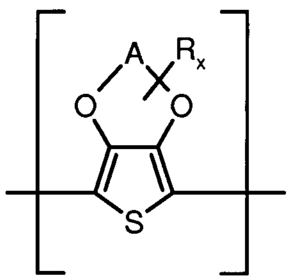
(II)

worin

A, R und x die oben für die allgemeinen Formeln (I) und (II) genannte Bedeutung haben,

sowie wenigstens einen polymeren organischen Binder aus einer Dispersion enthaltend wenigstens ein polymeres Anion und wenigstens ein gegebenenfalls substituiertes Polyanilin und/oder ein Polythiophen mit wiederkehrenden Einheiten der allgemeinen Formel (I), (II) oder wiederkehrenden Einheiten der allgemeinen Formel (I) und (II) und wenigstens einen polymeren organischen Binder aufgebracht.

Die Dispersionen können außerdem ein oder mehrere Lösungsmittel enthalten. Als Lösungsmittel kommen die vorangehend bereits für die Vorstufen genannten in Frage. Bevorzugte Lösungsmittel sind Wasser oder andere protische Lösungsmittel wie Alkohole, z.B. Methanol, Ethanol, i-Propanol und Butanol, sowie Mischungen von Wasser mit diesen Alkoholen, besonders bevorzugtes Lösungsmittel ist Wasser.

Als polymere Anionen und polymere organische Binder in der polymeren Außenschicht kommen die vorangehend im Zusammenhang mit dem erfindungsgemäßen Elektrolytkondensator bereits aufgeführten in Frage. Vorzugsbereiche gelten in beliebiger Kombination analog.

Der Zusatz von polymeren organischen Bindern hat den großen Vorteil, dass die Adhäsion der äußeren Polymerschicht an den Kondensatorkörper erhöht wird. Darüber hinaus erhöht der polymere organische Binder den Feststoffanteil in der Dispersion, so dass bereits mit einer Tränkung eine hinreichende Außenschichtdicke erzielt werden kann und die Kantenbelegung deutlich verbessert wird.

Für die Polythiophene mit wiederkehrenden Einheiten der allgemeinen Formel (I) und/oder (II) in der polymeren Außenschicht gilt das vorangehend im Zusammenhang mit dem erfindungsgemäßen Elektrolytkondensator bereits aufgeführte. Vorzugsbereiche gelten in beliebiger Kombination analog.

Die Dispersionen enthaltend wenigstens ein polymeres Anion und gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II) können außerdem Vernetzer, oberflächenaktive Stoffe, wie z.B. ionische oder nichtionische Tenside oder Haftvermittler, und/oder Additive enthalten. Als Vernetzer, oberflächenaktive Stoffe und/oder Additive können oben aufgeführte verwendet werden.

Die Dispersionen können zusätzlich auch monomere Anionen enthalten.

Bevorzugt enthalten die Dispersionen weitere Additive, die die Leitfähigkeit steigern, wie z.B. ethergruppenhaltige Verbindungen, wie z.B. Tetrahydofuran, lactongruppenhaltige Verbindungen wie γ-Butyrolacton, γ-Valerolacton, amid- oder lactamgruppenhaltige Verbindungen wie Caprolactam, N-Methylcaprolactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon, Sulfone und Sulfoxide, wie z.B. Sulfolan (Tetramethylensulfon), Dimethylsulfoxid (DMSO), Zucker oder Zuckerderivate, wie z.B. Saccharose, Glucose, Fructose, Lactose, Zuckeralkohole wie z.B. Sorbit, Mannit, Furanderivate, wie z.B. 2- Furancarbonsäure, 3-Furancarbonsäure, und/oder Di- oder Polyalkohole, wie z.B. Ethylenglycol, Glycerin, Di- bzw.

Triethylenglycol,. Besonders bevorzugt werden als leitfähigkeitserhöhende Additive Tetrahydrofuran, N-Methylformamid, N-Methylpyrrolidon, Dimethylsulfoxid oder Sorbit eingesetzt.

Die Herstellung der Dispersionen erfolgt aus gegebenenfalls substituierten Anilinen, Thiophenen der allgemeinen Formel (III), (IV) oder Mischungen aus Thiophenen der allgemeinen Formeln (III) und (IV) beispielsweise analog zu den in EP-A 440 957 genannten Bedingungen. Als Oxidationsmittel, Lösungsmittel und polymere Anionen kommen die vorangehend bereits aufgeführten in Frage.

Auch eine Herstellung des Polyanilin/Polyanion oder Polythiophen/Polyanion-Komplexes und anschließende Dispergierung oder Redispergierung in einem oder mehreren Lösungsmittel(n) ist möglich.

Die Dispersionen werden nach bekannten Verfahren, z.B. durch Spincoating, Tränkung, Gießen, Auftropfen, Spritzen, Aufsprühen, Aufrakeln, Bestreichen oder Bedrucken, beispielsweise Ink-jet-, Sieb- oder Tampondrucken auf den Kondensatorkörper aufgebracht.

Die Viskosität der Dispersion kann je nach Aufbringungsart zwischen 0,1 und 100 000 mPa·s betragen. Bevorzugt beträgt die Viskosität 1 bis 10 000 mPa·s, besonders bevorzugt zwischen 10 bis 1000 mPa·s, ganz besonders bevorzugt 30-500 mPa·s.

Bei Aufbringung der Dispersion auf Kondensatorkörper mittels Tränkung kann es vorteilhaft sein, dass man vor der Tränkung einen dünnen Film höherer Viskosität auf der Oberfläche der Dispersion ausbilden lässt. Wird der Kondensatorkörper dann in ein oder mehreren Tränkungs- und Trocknungszyklen sukzessive tiefer in eine solche Dispersion getaucht, so wird die Belegung der Kanten und Ecken des Kondensatorkörpers deutlich verbessert und eine Blasenbildung im trocknen Polymerfilm unterbunden. So kann der Kondensatorkörper beispielsweise im ersten Schritt nur zur Hälfte in die Dispersion getränkt und anschließend getrocknet werden. In einem zweiten Tränkungsschritt kann der Kondensatorkörper dann vollständig in die Dispersion getaucht und anschließend getrocknet werden. Das Ausbilden des dünnen Films höherer Viskosität auf der Oberfläche der Dispersion kann beispielsweise durch einfaches Stehen lassen an offener Atmosphäre erreicht werden. Beschleunigen lässt sich die Filmbildung z.B. durch Erwärmen der Dispersion oder durch Erhitzen der Dispersionsoberfläche mit warmer Luft oder Wärmestrahlung.

Bevorzugt werden Dispersionen enthaltend wenigstens ein polymeres Anion und gegebenenfalls substituiertes Polyanilin und/oder wenigstens ein Polythiophen mit wiederkehrenden Einheiten der allgemeinen Formel (I), (II) oder

wiederkehrenden Einheiten der allgemeinen Formel (I) und (II) eingesetzt, die im getrockneten Zustand eine spezifische Leitfähigkeit von größer 10 S/cm, besonders bevorzugt größer 20 S/cm, ganz besonders bevorzugt größer 50 S/cm und überaus bevorzugt größer 100 S/cm aufweisen.

Auch an die Aufbringung der polymeren Außenschicht können sich Trocknung, Reinigung der Schicht durch Waschen, Reformierung und mehrmaliges Aufbringen - wie vorangehend bereits für die Herstellung des Feststoffelektrolyten beschrieben - anschließen. Je nach verwendetem polymeren organischen Binder oder Vernetzer können auch weitere Behandlungsschritte wie z.B. Aushärtung oder Vernetzung durch Temperatur oder Licht angewendet werden. Ferner können weitere Schichten auf die polymere Außenschicht aufgebracht werden.

Überraschenderweise wurde gefunden, dass für metalloxidische Dielektrika nach Auftragung und Trocknung der Dispersion keine weiteren Behandlungsschritte der Schicht erforderlich sind, um Feststoffelektrolytkondensatoren mit niedrigem ESR und niedrigem Reststrom zu fertigen. Üblicherweise muss bei anderen Verfahren zur Herstellung einer polymeren Außenschicht die Oxidschicht nach Aufbringen der leitfähigen polymeren Außenschicht reformiert werden, um niedrige Restströme zu erzielen. Durch diese Reformierung in einem Elektrolyten kann sich die polymere Außenschicht lokal vom Kondensatorkörper ablösen, wodurch der ESR erhöht wird. Bei Verwendung des erfindungsgemäßen Verfahrens kann die Reformierung entfallen, ohne dass sich dadurch der Reststrom erhöht.

Zur Herstellung des Elektrodenkörpers werden bevorzugt die oben für den Elektrolytkondensator aufgeführten Ventilmetalle oder Verbindungen mit vergleichbaren Eigenschaften verwendet. Vorzugsbereiche gelten entsprechend.

Die oxidierbaren Metalle werden beispielsweise in Pulverform zu einem porösen Elektrodenkörper gesintert oder es wird einem metallischen Körper eine poröse Struktur aufgeprägt. Letzteres kann z.B. durch Ätzen einer Folie erfolgen.

Die porösen Elektrodenkörper werden beispielsweise in einem geeigneten Elektrolyten, wie z.B. Phosphorsäure, durch Anlegen einer Spannung oxidiert. Die Höhe dieser Formierspannung ist abhängig von der zu erzielenden Oxidschichtdicke bzw. der späteren Anwendungsspannung des Kondensators. Bevorzugte Spannungen sind 1 bis 300 V, besonders bevorzugt 1 bis 80V.

Bevorzugt werden zur Herstellung des Elektrodenkörpers Metallpulver mit einer spezifischen Ladung größer als 35000 μC/g, besonders bevorzugt mit einer spezifischen Ladung größer 45000 μC/g, ganz besonders bevorzugt mit einer spezifischen Ladung größer 65000 μC/g, überaus bevorzugt mit einer spezifischen Ladung größer 95000 μC/g verwendet. In bevorzugten Ausführungsformen des erfindungsgemäßen Verfahrens werden Metallpulver mit einer spezifischen Ladung größer 140000 μC/g eingesetzt.

Die spezifische Ladung berechnet sich dabei wie folgt:

**Spezifische Ladung = (Kapazität * Spannung)/ Gewicht des oxidierten Elektrodenkörpers.**

Die Kapazität ergibt sich dabei aus der Kapazität des oxidierten Elektrodenkörpers gemessen bei 120 Hz in einem wässrigen Elektrolyten. Die elektrische Leitfähigkeit des Elektrolyten ist dabei hinreichend groß, so dass es bei 120 Hz noch nicht zu einem Kapazitätsabfall aufgrund des elektrischen Widerstands des Elektrolyten kommt. Beispielsweise werden 18 %ige wässrige Schwefelsäure-Elektrolyte zur Messung eingesetzt. Die Spannung in obiger Formel entspricht der maximalen Formierspannung (Oxidationsspannung).

Mit dem erfindungsgemäßen Verfahren lassen sich auf besonders einfache Weise Feststoffelektrolytkondensatoren mit einer dichten polymeren Außenschicht, die eine guten Kantenbelegung und Haftung aufweisen, herstellen. Die Kondensatoren zeichnen sich gleichzeitig durch niedrige Restströme und einen niedrigen ESR aus.

Die erfindungsgemäßen Elektrolytkondensatoren und die erfindungsgemäß hergestellten Elektrolytkondensatoren eignen sich aufgrund ihres niedrigen Reststroms und ihres niedrigen ESR hervorragend als Bauteil in elektronischen Schaltungen. Bevorzugt sind digitale elektronische Schaltungen, wie sie sich beispielsweise in Computern (Desktop, Laptop, Server), in tragbaren elektronischen Geräten, wie z.B. Mobiltelefone und Digitalkameras, in Geräten der Unterhaltungselektronik, wie z.B. in CD/DVD Spielern und Computerspielkonsolen, in Navigationssystemen und in Telekommunikationseinrichtungen befinden.

## Beispiele

### Beispiel 1:

Herstellung von erfindungsgemäßen Kondensatoren

1. Herstellung von oxidierten Elektrodenkörpern

Tantalpulver mit einer spezifischen Kapazität von 50 000 μFV/g wurde zu Pellets gepresst und gesintert, um

einen porösen Elektrodenkörper mit den Abmessungen 4,2 mm * 3 mm* 1.6 mm zu bilden. Die Pellets (Anodenpellets) wurden in einem Phosphorsäureelektrolyten auf 30 V anodisiert.

2. Chemische in-situ Beschichtung der Anodenpellets

Es wurde eine Lösung, bestehend aus einem Gewichtsteil 3,4-Ethylendioxythiophen (BAYTRON® M, H.C. Starck GmbH) und 20 Gewichtsteilen einer 40 gew.-%igen ethanolischen Lösung von Eisen(III)-p-toluolsulfonat (BAYTRON® C-E, H.C. Starck GmbH) hergestellt.

Die Lösung wurde zur Imprägnierung von 9 Anodenpellets verwendet. Die Anodenpellets wurden in dieser Lösung getränkt und anschließend für 30 min bei Raumtemperatur (20°C) getrocknet. Danach wurden sie 15 min bei 50°C und 15 min bei 150°C in einem Trockenschrank wärmebehandelt. Anschließend wurden die Pellets in Wasser 30 min lang gewaschen. Die Anodenpellet wurden 30 min in einer 0,25 Gew.-% wässrigen Lösung von p-Toluolsulfonsäure reformiert, anschließend in destilliertem Wasser gespült und getrocknet. Die beschriebene Tränkung, Trocknung, Temperaturbehandlung und Reformierung wurden noch zwei weitere Male durchgeführt.

3. Aufbringen einer polymeren Außenschicht

Die Anodenpellets wurden anschließend in einer wässrigen Dispersion, bestehend aus 90 Teilen einer wässrigen PEDT/PSS Dispersion (BAYTRON® P, H.C. Starck GmbH), 4 Teilen NMP, 4,2 Teilen eines sulfonierten Polyesters (Eastek® 1400, Feststoffgehalt. 30 Gew.-% in Wasser, East-man) und 0,2 Teilen Tensid (Zonyl® FS 300, Du Pont) getränkt und 15 min bei 80°C getrocknet.

Abschließend wurden die Pellets mit einer Graphit und Silberschicht überzogen.

Die 9 Kondensatoren hatten im Mittel folgende elektrischen Werte:

| | |
|---|---|
| Kapazität: | 147 µF |
| ESR: | 26 mΩ |
| Reststrom: | 5 µA |

Das Produkt aus geometrischer Oberfläche und ESR betrug 1250 m$\Omega$mm$^2$.

Die Kapazität wurde dazu bei 120 Hz und der äquivalente Serienwiderstand (ESR) bei 100 kHz mittels eines LCR Meters (Agilent 4284A) bestimmt. Der Reststrom wurde drei Minuten nach Anlegen einer 10 V Spannung mit einem Keithley 199 Multimeter bestimmt.

**Beispiel 2:**

Herstellung von erfindungsgemäßen Kondensatoren

Tantalpulver mit einer spezifischen Kapazität von 50 000 µFV/g wurde zu Pellets gepresst und gesintert, um einen porösen Elektrodenkörper mit den Abmessungen 4,2 mm * 3 mm* 0,8 mm zu bilden. Die Pellets (Anodenpellets) wurden in einem Phosphorsäureelektrolyten auf 30 V anodisiert.

Die chemische in-situ Beschichtung und das Aufbringen der polymeren Außenschicht erfolgte gemäß Beispiel 1 (Schritt 2 und 3).

Die Anodenpellets wurden nach Aufbringen der polymeren Außenschicht unter einem Lichtmikroskop betrachtet: Die gesamte äußere Oberfläche war mit einem dichten Polymerfilm belegt. Auch die Kanten zeigten eine durchgehende Polymerfilmbelegung.

Fig. 3 zeigt eine lichtmikroskopische Aufnahme einer Bruchfläche des erfindungsgemäßen Kondensators. Deutlich ist ein ca. 5-10 µm dicke polymere Außenschicht zu erkennen, die auch die Kante des Kondensatorpellets sehr gut umhüllt.

Zwei der Anodenpellets wurden mit einer Graphit- und Silberschicht überzogen.

Die erfindungsgemäßen Kondensatoren hatten einen ESR von durchschnittlich 15 mΩ. Das Produkt aus geometrischer Oberfläche und ESR betrug 551 m$\Omega$mm$^2$.

**Vergleichsbeispiel 1:**

Herstellung von nicht erfindungsgemäßen Kondensatoren ohne Binder in der Außenschicht

Es wurden 9 Kondensatoren analog zu Beispiel 1 gefertigt, jedoch wurde für die polymere Außenschicht nur

die wässrigen PEDT/PSS Dispersion (BAYTRON® P , H.C. Starck GmbH) ohne Binder und weitere Zusätze verwendet. Um eine hinreichende Schichtdicke zu erzielen, wurden die Pellets zweimal getränkt und getrocknet.

Die polymere Außenschicht aus PEDT/PSS ohne Binder platzte beim Aufbringen der Graphit und Silberschicht ab. Alle Kondensatoren waren elektrisch kurzgeschlossen und ließen sich nicht weiter vermessen.

Der Vergleich mit Beispiel 1 zeigt, dass die Zugabe von polymerem organischen Binder die Adhäsion der polymeren Außenschicht zum porösen Kondensatorkörper erhöht und dadurch Kondensatoren mit niedrigen Restströmen ermöglicht.

**Vergleichsbeispiel 2:**

Herstellung von nicht erfindungsgemäßen Kondensatoren ohne in-situ Polymerisation

Es wurden 9 Kondensatoren analog zu Beispiel 1 gefertigt, jedoch wurde keine chemische in-situ Beschichtung vorgenommen (nur 1. Und 3. Schritt aus Beispiel 1).

Die Kondensatoren hatten eine Kapazität im Mittel von nur 0,9 μF. Die erfindungsgemäßen Kondensatoren aus Beispiel 1 hatten dagegen mit 147 μF eine ca. 160fach höhere Kapazität. Dies zeigt, dass das PEDT/PSS nur im Randbereich des Kondensatorkörpers in die poröse Struktur eindringt und die polymere Außenschicht sich im Wesentlichen auf der äußeren Oberfläche des Kondensatorkörpers befindet.

**Vergleichsbeispiel 3:**

Herstellung von nicht erfindungsgemäßen Kondensatoren mit einer in-situ polymerisierten polymeren Außenschicht

A) Es wurden 9 Kondensatoren analog zu Beispiel 1 gefertigt, jedoch wurde statt der polymeren Außenschicht aus PEDT/PSS (3. Schritt in Beispiel 1) eine in-situ polymerisierte Außenschicht dadurch erzeugt, dass zwei weitere Tränkungszyklen (2. Schritt in Beispiel 1) zusätzlich vorgenommen wurden, jedoch jeweils ohne Reformierung. Bei Anlegen einer Spannung von 10 V waren alle Kondensatoren elektrisch kurzgeschlossen.

B) Es wurden 9 Kondensatoren analog zu A) gefertigt, jedoch mit Reformierung bei den zwei weiteren Tränkungszyklen.

3 von 9 Kondensatoren waren kurzgeschlossen, die restlichen 6 zeigten bei 10 V einen Reststrom von durchschnittlich 1 μA.

Dieses Beispiel zeigt, dass bei einer Außenschichtbildung mittels in-situ Polymerisation eine Reformierung nach Aufbringen der Außenschicht notwendig ist, um niedrige Restströme zu erzielen. Bei den erfindungsgemäßen Kondensatoren aus Beispiel 1 ist diese Reformierung nicht erforderlich. Zudem waren 33 % der Kondensatoren aus Beispiel B defekt, während 100 % der erfindungsgemäßen Kondensatoren aus Beispiel 1 niedrige Restströme aufwiesen. Das erfindungsgemäße Verfahren zur Herstellung von Kondensatoren ist daher nicht nur einfacher, sondern auch zuverlässiger. Damit ist die Ausbeute an funktionsfähigen Kondensatoren im erfindungsgemäßen Herstellungsverfahren deutlich höher.

**Beispiel 3:**

Beständigkeit der erfindungsgemäßen Kondensatoren gegenüber mechanischen Belastungen

Die erfindungsgemäßen Kondensatoren aus Beispiel 1 wurden auf der Silberschicht mittels eines metallischen Federstifts (Federkraft 3 N, runde Auflagefläche mit Durchmesser 1,5 mm, Auflagedruck ca. 170 N/$cm^2$ oder 17 bar) für eine Reststrommessung kontaktiert.

Der Reststrom bei 10 V erhöhte sich bei dieser starken mechanischen Belastung dabei von durchschnittlich 5 μA auf 144 μA.

Die nicht erfindungsgemäßen Kondensatoren aus Beispiel 4A mit einer in-situ polymerisierten Außenschicht wurden demselben Belastungstest unterzogen. An die 6 Kondensatoren mit einem Reststrom von 1 μA aus Beispiel 4A ließen sich keine 10 V Spannung anlegen, ohne elektrische Kurzschlüsse zu erzeugen. Bereits bei 0,5 V zeigten die Kondensatoren bereits einen durchschnittlichen Reststrom von fast 2000 μA.

Dieses Beispiel zeigt, dass die erfindungsgemäßen Kondensatoren eine hohe Stabilität gegenüber mechanischen Belastungen aufweisen.

**Beispiel 4:**

Erfindungsgemäße Herstellung von Kondensatoren mit unterschiedlichen polymeren Dispersionen

1. Herstellung von oxidierten Elektrodenkörpern

Tantalpulver mit einer spezifischen Kapazität von 50 000 µFV/g wurde zu Pellets gepresst und gesintert, um einen porösen Elektrodenkörper mit den Abmessungen 4,2 mm * 3 mm* 1.6 mm zu bilden. Die Pellets (Anodenpellets) wurden in einem Phosphorsäureelektrolyten auf 30 V anodisiert.

2. Chemische in-situ Beschichtung der Anodenpellets

Es wurde eine Lösung, bestehend aus einem Gewichtsteil 3,4-Ethylendioxythiophen (BAYTRON® M, H.C. Starck GmbH) und 20 Gewichtsteilen einer 40 Gew.-%igen ethanolischen Lösung von Eisen(III)-p-toluolsulfonat (BAYTRON® C-E, H.C. Starck GmbH) hergestellt.

Die Lösung wurde zur Imprägnierung von 12 Anodenpellets verwendet. Die Anodenpellets wurden in dieser Lösung getränkt und anschließend für 30 min bei Raumtemperatur getrocknet. Danach wurden sie 15 min bei 50°C und 15 min bei 150°C in einem Trockenschrank wärmebehandelt. Anschließend wurden die Pellets in Wasser 30 min lang gewaschen. Die Anodenpellet wurden 30 min in einer 0,25 Gew.-% wässrigen Lösung von p-Toluolsäure reformiert, anschließend in destilliertem Wasser gespült und getrocknet. Die beschriebene Tränkung, Trocknung, Temperaturbehandlung und Reformierung wurden noch zwei weitere Male durchgeführt.

3. Aufbringen einer polymeren Außenschicht

Je 6 Anodenpellets wurden anschließend in einer der folgenden Dispersionen getränkt und anschließend 15 min bei 80°C getrocknet:

Dispersion A:

90 Teilen einer wässrigen PEDT/PSS Dispersion (BAYTRON® P, H.C. Starck GmbH), 4 Teilen Dimethylsufoxid (DMSO), 4,2 Teilen eines sulfonierten Polyesters (Eastek® 1400, Feststoffgehalt. 30 Gew.-% in Wasser, Eastman) und 0,2 Teilen Tensid (Zonyl® FS 300, Du Pont)

Dispersion B:

90 Teilen einer wässrigen PEDT/PSS Dispersion (BAYTRON® P, H.C. Starck GmbH), 4 Teilen NMP, 4,2 Teilen eines sulfonierten Polyesters (Eastek® 1400, Feststoffgehalt 30 Gew.-% in Wasser, Eastman) und 0,2 Teilen Tensid (Zonyl® FS 300, Du Pont)

Abschließend wurden die Pellets mit einer Graphit und Silberschicht überzogen.

Die 6 Kondensatoren hatten im Mittel jeweils folgende elektrischen Werte:

| | Dispersion A | Dispersion B |
|---|---|---|
| ESR in mΩ | 34 | 33 |
| Reststrom in µA | 2,6 | 10 |

Der äquivalente Serienwiderstand (ESR) wurde bei 100 kHz mittels eines LCR Meters (Agilent 4284A) bestimmt. Der Reststrom wurde drei Minuten nach Anlegen einer 10 V Spannung mit einem Keithley 199 Multimeter bestimmt.

**Beispiel 5:**

Temperaturstabilität des äquivalenten Serienwiderstands von erfindungsgemäßen Kondensatoren

4 Kondensatoren aus Beispiel 4, die mit Dispersion B hergestellt wurden, wurden 3 min bei 260°C in einem Trockenschrank gelagert.

Der ESR nach der Temperaturbelastung betrug im Mittel 32 mΩ. Dies zeigt, dass die erfindungsgemäßen Kondensatoren typischen Temperaturbelastungen, die beim Auflöten der Kondensatoren auf Leiterplatten auftreten,

standhalten.

**Beispiel 6:**

Herstellung einer leitfähigen Schicht

Es wurde eine leitfähige Schicht aus Dispersion B aus Beispiel 4 hergestellt. Dazu wurde ein Teil der Dispersion auf einen Glasobjektträger (26 mm*26 mm*1 mm) mittels eines Spincoaters (Chemat Technology KW-4A) bei 1000 U/min für 5 Sekunden aufgeschleudert. Die Probe wurde 15 min bei 80°C getrocknet. Anschließend wurden zwei gegenüberliegende Kanten des Objektträgers mit Leitsilber beschichtet. Nach Trocknung des Leitsilbers wurden die beiden Silberstreifen kontaktiert und mit einem Keithley 199 Multimeter der Oberflächenwiderstand ermittelt. Die Schichtdicke wurde mit einem Tencor Alpha Step 500 Surface Profiler bestimmt. Aus Oberflächenwiderstand und Schichtdicke wurde die spezifische Leitfähigkeit ermittelt. Die Schichtdicke betrug 345 nm und die spezifische Leitfähigkeit 55 S/cm.

## Patentansprüche

1. Elektrolytkondensator enthaltend

   - einen porösen Elektrodenkörper eines Elektrodenmaterials,
   - ein Dielektrikum, das die Oberfläche dieses Elektrodenmaterials bedeckt,
   - einen Feststoffelektrolyten enthaltend ein leitfähiges Material, der die Dielektrikumsoberfläche ganz oder teilweise bedeckt,
   - eine Schicht auf der ganzen oder einem Teil der äußeren Oberfläche des mit einem Dielektrikum sowie ganz oder teilweise mit einem Feststoffelektrolyten bedeckten porösen Elektrodenkörpers enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II),

   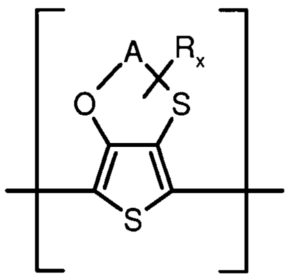 (I) 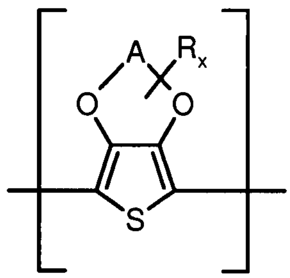 (II)

   worin

   A für einen gegebenenfalls substituierten $C_1$-$C_5$-Alkylenrest steht,
   R für einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,
   x für eine ganze Zahl von 0 bis 8 steht und

   für den Fall, dass mehrere Reste R an A gebunden sind, diese gleich oder unterschiedlich sein können, **dadurch gekennzeichnet, dass** die Schicht enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II) wenigstens einen Binder enthält, wobei der Binder ein polymerer organischer Binder ist.

2. Elektrolytkondensator gemäß Anspruch 1, **dadurch gekennzeichnet, dass** das leitfähige Material des Feststoffelektrolyten, welcher die Dielektrikumsoberfläche ganz oder teilweise bedeckt, ein leitfähiges Polymer darstellt.

3. Elektrolytkondensator gemäß Anspruch 1 oder 2, **dadurch gekennzeichnet, dass** der Anteil des polymeren Binders

in der Außenschicht in einem Bereich von 1 - 90 % liegt.

4. Elektrolytkondensator gemäß Anspruch 3, **dadurch gekennzeichnet, dass** der Anteil des polymeren Binders in der Außenschicht in einem Bereich von 5 - 80 % liegt.

5. Elektrolytkondensator gemäß wenigstens einem der Ansprüche 2 bis 4, **dadurch gekennzeichnet, dass** das im Feststoffelektrolyten enthaltene leitfähige Polymer ein gegebenenfalls substituiertes Polythiophen, Polypyrrol oder Polyanilin ist.

6. Elektrolytkondensator gemäß wenigstens einem der Ansprüche 2 bis 5, **dadurch gekennzeichnet, dass** das im Feststoffelektrolyten enthaltene leitfähige Polymer ein Polythiophen mit wiederkehrenden Einheiten der allgemeinen Formel (I), (II) oder wiederkehrenden Einheiten der allgemeinen Formel (I) und (II) ist.

7. Elektrolytkondensator gemäß wenigstens einem der Ansprüche 1 bis 6, **dadurch gekennzeichnet, dass** der Feststoffelektrolyt monomere Anionen enthält.

8. Elektrolytkondensator gemäß Anspruch 1, **dadurch gekennzeichnet, dass** das leitfähige Material ein Ladungstransferkomplex, Mangandioxid oder ein Salz ist.

9. Elektrolytkondensator gemäß wenigstens einem der Ansprüche 1 bis 8, **dadurch gekennzeichnet, dass** das in der Schicht auf der ganzen oder einem Teil der äußeren Oberfläche des porösen Elektrodenkörpers enthaltene Polythiophen Poly(3,4-ethylendioxythiophen) ist.

10. Elektrolytkondensator gemäß wenigstens einem der Ansprüche 1 bis 9, **dadurch gekennzeichnet, dass** das in der Schicht auf der ganzen oder einem Teil der äußeren Oberfläche des porösen Elektrodenkörpers enthaltene polymere Anion ein Anion einer polymeren Carbon- oder Sulfonsäure ist.

11. Elektrolytkondensator gemäß wenigstens einem der Ansprüche 1 bis 10, **dadurch gekennzeichnet, dass** das in der Schicht auf der ganzen oder einem Teil der äußeren Oberfläche des porösen Elektrodenkörpers enthaltene polymere Anion ein Anion der Polystyrolsulfonsäure ist.

12. Elektrolytkondensator gemäß wenigstens einem der Ansprüche 1 bis 7 und 9 bis 11, **dadurch gekennzeichnet, dass** der Feststoffelektrolyt Poly(3,4-ethylendioxythiophen) und monomere Gegenionen und die Schicht auf der äußeren Oberfläche Poly(3,4-ethylendioxythiophen)/Polystyrolsulfonsäure und einen oder mehrere polymere(n), organische(n) Binder enthält.

13. Elektrolytkondensator gemäß wenigstens einem der Ansprüche 1 bis 12, **dadurch gekennzeichnet, dass** es sich bei dem Elektrodenmaterial um ein Ventilmetall oder eine Verbindung mit einem Ventilmetall mit vergleichbaren Eigenschaften handelt.

14. Elektrolytkondensator gemäß Anspruch 13, **dadurch gekennzeichnet, dass** es sich bei dem Ventilmetall oder der Verbindung mit vergleichbaren Eigenschaften um Tantal, Niob, Aluminium, Titan, Zirkon, Hafnium, Vanadium, eine Legierung oder Verbindung von wenigstens einem dieser Metalle mit anderen Elementen. NbO oder eine Legierung oder Verbindung von NbO mit anderen Elementen handelt.

15. Elektrolytkondensator gemäß Anspruch 13 oder 14, **dadurch gekennzeichnet, dass** es sich bei dem Dielektrikum um ein Oxid des Ventilmetalls oder ein Oxid der Verbindung mit elektrischen Eigenschaften eines Ventilmetalls handelt.

16. Elektrolytkondensator wenigstens einem der Ansprüche 1 bis 15, **dadurch gekennzeichnet, dass** die mittlere Schichtdicke der Schicht enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II) 1 - 100 $\mu$m beträgt.

17. Verfahren zur Herstellung eines Elektrolytkondensators gemäß wenigstens einem der Ansprüche 1 bis 7 und 9 bis 16, **dadurch gekennzeichnet, dass** der Feststoffelektrolyt enthaltend wenigstens ein leitfähiges Polymer hergestellt wird, indem Vorstufen zur Herstellung leitfähiger Polymere, ein oder mehrere Oxidationsmittel und gegebenenfalls Gegenionen, zusammen oder nacheinander gegebenenfalls in Form von Lösungen, auf ein - gegebenenfalls mit

weiteren Schichten belegtes - Dielektrikum eines porösen Elektrodenkörpers aufgebracht und chemisch oxidativ bei Temperaturen von -10°C bis 250°C polymerisiert werden, oder dass Vorstufen zur Herstellung leitfähiger Polymere und Gegenionen gegebenenfalls aus Lösung durch elektrochemische Polymerisation bei Temperaturen von -78°C bis 250°C auf einem - gegebenenfalls mit weiteren Schichten belegten - Dielektrikum eines porösen Elektrodenköpers polymerisiert werden, und gegebenenfalls nach Aufbringen weitere Schichten auf den Kondensatorkörper die Schicht enthaltend wenigstens ein polymeres Anion und wenigstens ein gegebenenfalls substituiertes Polyanilin und/oder ein Polythiophen mit wiederkehrenden Einheiten der allgemeinen Formel (I), (II) oder wiederkehrenden Einheiten der allgemeinen Formel (I) und (II)

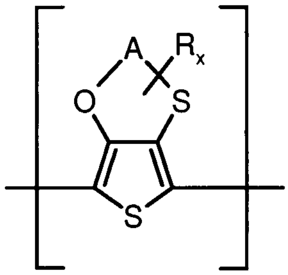 (I) 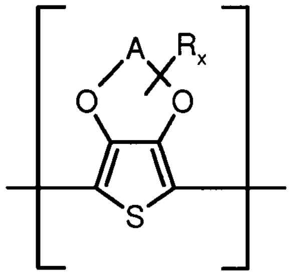 (II)

worin

A, R und x die in Anspruch 1 oder 8 genannte Bedeutung haben,
und wenigstens einem polymeren organischen Binder aus einer Dispersion enthaltend wenigstens ein polymeres Anion und wenigstens ein gegebenenfalls substituiertes Polyanilin und/oder ein Polythiophen mit wiederkehrenden Einheiten der allgemeinen Formel (I), (II) oder wiederkehrenden Einheiten der allgemeinen Formel (I) und (II) und wenigstens einen polymeren organischen Binder aufgebracht wird.

**18.** Verfahren gemäß Anspruch 17, **dadurch gekennzeichnet, dass** als Vorstufen zur Herstellung leitfähiger Polymere gegebenenfalls substituierte Thiophene, Pyrrole oder Aniline eingesetzt werden.

**19.** Verfahren gemäß Anspruch 17 oder 18, **dadurch gekennzeichnet, dass** als Vorstufe zur Herstellung leitfähiger Polymere 3,4-Ethylendioxythiophen eingesetzt wird.

**20.** Verfahren gemäß Anspruch wenigstens einem der Ansprüche 17 bis 19, **dadurch gekennzeichnet, dass** als Oxidationsmittel Alkali- oder Ammoniumperoxodisulfate, Wasserstoffperoxid. Alkaliperborate, Eisen-III-salze organischer Säuren, Eisen-III-salze anorganischer Säuren oder Eisen-III-salze anorganischer Säuren, welche organische Reste aufweisen, verwendet werden.

**21.** Verfahren gemäß wenigstens einem der Ansprüche 17 bis 20, **dadurch gekennzeichnet, dass** der Feststoffelektrolyt nach der Polymerisation und gegebenenfalls nach Trocknung mit geeigneten Lösungsmitteln gewaschen wird.

**22.** Verfahren gemäß wenigstens einem der Ansprüche 17 bis 21, **dadurch gekennzeichnet, dass** die Oxidschicht des Metalls nach der Polymerisation elektrochemisch reformiert wird.

**23.** Verfahren gemäß wenigstens einem der Ansprüche 17 bis 22, **dadurch gekennzeichnet, dass** das Aufbringen und gegebenenfalls Trocknen und Waschen der leitfähigen Polymerschicht und Reformieren der Oxidschicht mehrfach durchgeführt wird.

**24.** Verfahren gemäß wenigstens einem der Ansprüche 17 bis 23, **dadurch gekennzeichnet, dass** es sich bei den Gegenionen um Anionen von monomeren Alkan- oder Cycloalkansulfonsäuren oder aromatischen Sulfonsäuren oder Kombinationen hieraus handelt.

**25.** Verfahren gemäß wenigstens einem der Ansprüche 17 bis 24, **dadurch gekennzeichnet, dass** die Dispersion enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II) und wenigstens einen polymeren organischen Binder als Lösungsmittel organische Lösungsmittel, Wasser oder Mischungen aus diesen enthalten.

**26.** Verfahren gemäß wenigstens einem der Ansprüche 17 bis 25, **dadurch gekennzeichnet, dass** die Dispersion Vernetzer, oberflächenaktive Substanzen und/oder weitere Additive enthält.

**27.** Verfahren gemäß Anspruch 26, **dadurch gekennzeichnet, dass** die Dispersion als weitere Additive ether-, lacton-, amid- oder lactamgruppenhaltige Verbindungen, Sulfone, Sulfoxide, Zucker, Zuckerderivate, Zuckeralkohole, Furanderivate und/oder Di- oder Polyalkohole enthält.

**28.** Verfahren gemäß wenigstens einem der Ansprüche 17 bis 27, **dadurch gekennzeichnet, dass** zur Herstellung des porösen Elektrodenkörpers Pulver des Elektrodenmaterials mit einer spezifischen Ladung von größer 35000 µC/g eingesetzt werden.

**29.** Verwendung von Elektrolytkondensatoren gemäß wenigstens einem der Ansprüche 1 bis 16 in elektronischen Schaltungen.

## Claims

**1.** Electrolytic capacitor comprising

- a porous electrode body comprising an electrode material,
- a dielectric material which Covers the surface of this electrode material,
- a solid electrolyte comprising a conductive material and covering the surface of the dielectric material wholly or partly,
- a layer covering all or part of the outer surface of the porous electrode body covered with a dielectric material and also, wholly or partly, with a solid electrolyte, and comprising at least one polymeric anion and at least one optionally substituted polyaniline and/or at least one polythiophene having recurring units of the general formula (I), (II) or recurring units of the general formula (I) and (II),

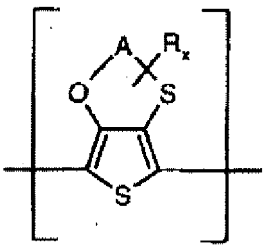

(I)

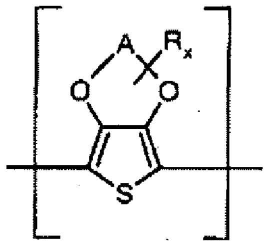

(II)

wherein

A represents an optionally substituted $C_1$-$C_5$, alkylene radical,
R represents a linear or branched, optionally substituted $C_1$-$C_{18}$ alkyl radical, an optionally substituted $C_5$-$C_{12}$ cycloalkyl radical, an optionally substituted $C_6$-$C_{14}$ aryl radical, an optionally substituted $C_7$-$C_{18}$ aralkyl radical, an optionally substituted $C_1$-$C_4$ hydroxyalkyl radical or a hydroxyl radical,
X represents an integer from 0 to 8, and

in the event that two or more R radicals are attached to A, these may be the same or different, **characterized in that** the layer comprising at least one polymeric anion and at least one optionally substituted polyaniline and/or at least one polythiophene having recurring units of the general formula (I), (11) or recurring units of the general formula (I) and (11) comprises at least one binder, wherein the binder is a polymeric organic binder.

**2.** Electrolytic capacitor according to Claim 1, **characterized in that** the conductive material of the solid electrolyte covering all or part of the surface of the dielectric material constitutes a conductive polymer.

**3.** Electrolytic capacitor according to Claim 1 or 2, **characterized in that** the proportion of polymeric binder in the outer

layer is in a range of 1-90%.

4. Electrolytic capacitor according to Claim 3, **characterized in that** the proportion of polymeric binder in the outer layer is in a range of 5-80%.

5. Electrolytic capacitor according to at least one of Claims 2 to 4, **characterized in that** the conductive polymer in the solid electrolyte is an optionally substituted polythiophene, polypyrrole or polyaniline.

6. Electrolytic capacitor according to at least one of Claims 2 to 5, **characterized in that** the conductive polymer in the solid electrolyte is a polythiophene having recurring units of the general formula (I), (11) or recurring units of the general formula (I) and (11).

7. Electrolytic capacitor according to at least one of Claims 1 to 6, **characterized in that** the solid electrolyte comprises monomeric anions.

8. Electrolytic capacitor according to Claim 1, **characterized in that** the conductive material is a charge transfer complex, manganese dioxide or a salt.

9. Electrolytic capacitor according to at least one of Claims 1 to 8, **characterized in that** the polythiophene in the layer on all or part of the outer surface of the porous electrode body is poly(3,4-ethylenedioxythiophene).

10. Electrolytic capacitor according to at least one of Claims 1 to 9, **characterized in that** the polymeric anion in the layer on all or part of the outer surface of the porous electrode body is an anion of a polymeric carboxylic or sulphonic acid.

11. Electrolytic capacitor according to at least one of Claims 1 to 10, **characterized in that** the polymeric anion in the layer on all or part of the outer surface of the porous electrode body is an anion of polystyrene sulphonic acid.

12. Electrolytic capacitor according to at least one of Claims 1 to 7 and 9 to 11, **characterized in that** the solid electrolyte comprises poly(3,4-ethylenedioxythiophene) and monomeric counterions and the layer on the outer surface comprises poly-(3,4-ethylenedioxythiophene)/polystyrene-sulphonic acid and one or more polymeric organic binders.

13. Electrolytic capacitor according to at least one of Claims 1 to 12, **characterized in that** the electrode material comprises a valve metal or a compound with a valve metal with comparable properties.

14. Electrolytic capacitor according to Claim 13, **characterized in that** the valve metal or the compound with comparable properties comprises tantalum, niobium, aluminium, titanium, zirconium, hafnium, vanadium, an alloy or compound of at least one of these metals with other elements, NbO or an alloy or compound of NbO with other elements.

15. Electrolytic capacitor according to Claim 13 or 14, **characterized in that** the dielectric material comprises an oxide of the valve metal or an oxide of the compound with electrical properties of a valve metal.

16. Electrolytic capacitor according to at least one of Claims 1 to 15, **characterized in that** the mean thickness of the layer comprising at least one polymeric anion and at least one optionally substituted polyaniline and/or at least one polythiophene having recurring units of the general formula (I), (11) or recurring units of the general formula (I) and (II) is 1-100 $\mu$m.

17. Process for preparing an electrolytic capacitor according to at least one of Claims 1 to 7 and 9 to 16, **characterized in that** the solid electrolyte comprising at least one conductive polymer is prepared by precursors for preparing conductive polymers, one or more oxidizing agents and optionally counterions being applied together or in succession optionally in the form of solutions to a dielectric material, optionally coated with further layers, of a porous electrode body and polymerized by means of chemical oxidation at temperatures of -10°C to 250°C, or **in that** precursors for preparing conductive polymers and counterions are polymerized, optionally from solution, by electrochemical polymerization at temperatures of -78°C to 250°C on a dielectric material, optionally coated with further layers, of a porous electrode body and optionally after application of further layers to the capacitor body the layer comprising at least one polymeric anion and at least one optionally substituted polyaniline and/or a polythiophene having recurring units of the general formula (I), (II) or recurring units of the general formula (I) and (II)

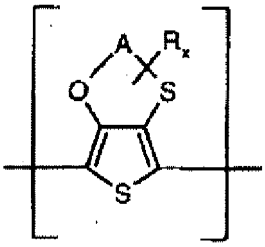 (I) 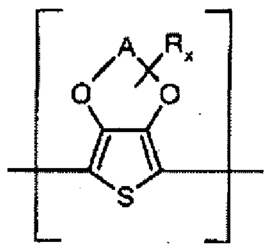 (II)

wherein

A, R and X are each as defined in Claim 1 or 8,
and at least one polymeric organic binder is applied from a dispersion comprising at least one polymeric anion and at least one optionally substituted polyaniline and/or a polythiophene having recurring units of the general formula (I), (II) or recurring units of the general formula (I) and (II) and at least one polymeric organic binder.

**18.** Process according to Claim 17, **characterized in that** optionally substituted thiophenes, pyrroles and anilines are used as precursors for preparing conductive polymers.

**19.** Process according to Claim 17 or 18, **characterized in that** 3,4-ethylenedioxythiophene is used as precursor for preparing conductive polymers.

**20.** Process according to at least one of Claims 17 to 19, **characterized in that** alkali metal or ammonium peroxodisulphates, hydrogen peroxide, alkali metal perborates, iron(III) salts of organic acids, iron(III) salts of inorganic acids or iron(III) salts of inorganic acids which include organic radicals are used as oxidizing agents.

**21.** Process according to at least one of Claims 17 to 20, **characterized in that** after the polymerization and, optionally, after dying the solid electrolyte is washed with suitable solvents.

**22.** Process according to at least one of Claims 17 to 21, **characterized in that** the oxide layer of the metal is electrochemically reformed after the polymerization.

**23.** Process according to at least one of Claims 17 to 22, **characterized in that** the applying and optionally dying and washing of the conductive polymeric layer and reforming of the oxide layer is carried out a plurality of times.

**24.** Process according to at least one of Claims 17 to 23, **characterized in that** the counterions comprise anions of monomeric alkane- or cycloalkane-sulphonic acids or aromatic sulphonic acids or combinations thereof.

**25.** Process according to at least one of Claims 17 to 24, **characterized in that** the dispersion comprising at least one polymeric anion and at least one optionally substituted polyaniline and/or at least one polythiophene with recurring units of the general formula (I), (II) or recurring units of the general formula (I) and (II) and at least one binder comprises by way of solvents organic solvents, water or mixtures thereof.

**26.** Process according to at least one of Claims 17 to 25, **characterized in that** the dispersion comprises crosslinkers, surface-active substances and/or further additives.

**27.** Process according to Claim 26, **characterized in that** the dispersion comprises by way of further additives ether-, lactone-, amide- or lactam-group-containing compounds, sulphones, sulphoxides, Sugars, Sugar derivatives, Sugar alcohols, furan derivatives and/or di- or polyalcohols.

**28.** Process according to at least one of Claims 17 to 27, **characterized in that** the porous electrode body is produced using powders of the electrode material having a specific charge of greater than 35 000 μC/g.

**29.** Use of electrolytic capacitors according to at least one of Claims 1 to 16 in electronic circuits.

## Revendications

**1.** Condensateur électrolytique, contenant

- un corps d'électrode poreux d'un matériau d'électrode,
- un diélectrique, qui recouvre la surface de ce matériau d'électrode,
- un électrolyte solide contenant un matériau conductible, qui recouvre la surface du diélectrique, totalement ou partiellement,
- une couche sur la totalité de la surface extérieure ou une partie de celle-ci du corps d'électrode poreux revêtu d'un diélectrique ainsi que totalement ou partiellement d'un électrolyte solide, contenant au moins un anion polymère et au moins une polyaniline le cas échéant substituée et / ou au moins un polythiophène avec des unités répétitives de formule générale (I), (II) ou des unités répétitives des formules générales (I) et (II),

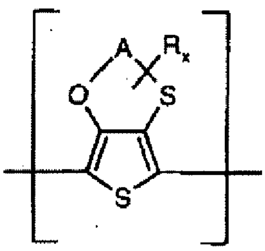

(I)

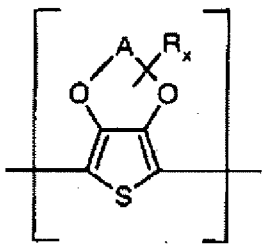

(II)

où

A représente un radical $C_1$-$C_5$-alkylène le cas échéant substitué,
R représente un radical $C_1$-$C_{18}$-alkyle linéaire ou ramifié, le cas échéant substitué, un radical $C_5$-$C_{12}$-cycloalkyle le cas échéant substitué, un radical $C_6$-$C_{14}$-aryle le cas échéant substitué, un radical $C_7$-$C_{18}$-aralkyle le cas échéant substitué, un radical $C_1$-$C_4$-hydroxyalkyle le cas échéant substitué ou un radical hydroxyle,
x vaut un nombre entier de 0 à 8 et

pour le cas où plusieurs radicaux R seraient liés à A, ceux-ci peuvent être identiques ou différents,
**caractérisé**
**en ce que** la couche contenant au moins un anion polymère et au moins une polyaniline le cas échéant substituée et/ou au moins un plythiophène avec des unités répétitives de formule générale (I), (II) ou des unités répétitives des formules générales (I) et (II) contient au moins un liant étant un liant organique polymère.

**2.** Condensateur électrolytique selon la revendication 1, **caractérisé en ce que** le matériau conductible de l'électrolyte solide, que la surface du diélectrique recouvre totalement pu partiellement, est un polymère conductible.

**3.** Condensateur électrolytique selon la revendication 1 ou 2, **caractérisé en ce que** la proportion du liant polymère dans la couche extérieure se situe dans une plage de 1-90%.

**4.** Condensateur électrolytique selon la revendication 3, **caractérisé en ce que** la proportion du liant polymère dans la couche extérieure se situe dans une plage de 5-80%.

**5.** Condensateur électrolytique selon au moins l'une quelconque des revendications 2 à 4, **caractérisé en ce que** le polymère conductible contenu dans l'électrolyte solide est un polythiophène, un polypyrrole ou une polyaniline le cas échéant substitué(e).

**6.** Condensateur électrolytique selon au moins l'une quelconque des revendications 2 à 5, **caractérisé en ce que** le polymère conductible contenu dans l'électrolyte solide est un polythiophène avec des unités répétitives de formule générale (I), (II) ou des unités répétitives des formules générales (I) et (II).

**7.** Condensateur électrolytique selon au moins l'une quelconque des revendications 1 à 6, **caractérisé en ce que** l'électrolyte solide contient des anions monomères.

8. Condensateur électrolytique selon la revendication 1, **caractérisé en ce que** le matériau conductible est un complexe de transfert de charge, du dioxyde de manganèse ou un sel.

9. Condensateur électrolytique selon au moins l'une quelconque des revendications 1 à 8, **caractérisé en ce que** le polythiophène contenu dans la couche sur la totalité de la surface extérieure ou une partie de celle-ci du corps d'électrode poreux est du poly(3,4-éthylènedioxythiophène).

10. Condensateur électrolytique selon au moins l'une quelconque des revendications 1 à 9, **caractérisé en ce que** l'anion polymère contenu dans la couche sur la totalité de la surface extérieure ou une partie de celle-ci du corps d'électrode poreux est un anion d'acide carboxylique ou sulfonique polymère.

11. Condensateur électrolytique selon au moins l'une quelconque des revendications 1 à 10, **caractérisé en ce que** l'anion polymère contenu dans la couche sur la totalité de la surface extérieure ou une partie de celle-ci du corps d'électrode poreux est un anion du poly(acide styrène sulfonique).

12. Condensateur électrolytique selon au moins l'une quelconque des revendications 1 à 7 et 9 à 11, **caractérisé en ce que** l'électrolyte solide contient du poly(3,4-éthylènedioxythiophène) et des contre-ions monomères et la couche sur la surface extérieure contient du poly-(3,4-éthylènedioxythiophène)/poly(acide styrène sulfonique) et un ou plusieurs liant (s) organique (s) polymère (s).

13. Condensateur électrolytique selon au moins l'une quelconque des revendications 1 à 12, **caractérisé en ce qu'**il s'agit, pour le matériau d'électrode, d'un métal valve ou d'un composé présentant des propriétés comparables à celles d'un métal valve.

14. Condensateur électrolytique selon la revendication 13, **caractérisé en ce qu'**il s'agit, pour le métal valve ou le composé présentant des propriétés comparables à celles d'un métal valve de tantale, de niobium, d'aluminium, de titane, de zirconium, d'hafnium, de vanadium, d'un alliage ou d'un composé d'au moins un de ces métaux avec d'autres éléments, de NbO ou d'un alliage ou d'un composé de NbO avec d'autres éléments.

15. Condensateur électrolytique selon la revendication 13 ou 14, **caractérisé en ce qu'**il s'agit, pour le diélectrique, d'un oxyde du métal valve ou d'un oxyde du composé présentant des propriétés électriques d'un métal valve.

16. Condensateur électrolytique selon au moins l'une quelconque des revendications 1 à 15, **caractérisé en ce que** l'épaisseur moyenne de la couche contenant au moins un anion polymère et au moins une polyaniline le cas échéant substituée et/ou au moins un polythiophène avec des unités répétitives de formule générale (I), (II) ou des unités répétitives des formules générales (I) et (II) est de 1-100 $\mu$m.

17. Procédé pour la préparation d'un condensateur électrolytique selon au moins l'une quelconque des revendications 1 à 7 et 9 à 16, **caractérisé en ce que** l'électrolyte solide contenant au moins un polymère conductible est préparé **en ce que** des précurseurs pour la préparation de polymères conductibles, un ou plusieurs oxydants et le cas échéant des contre-ions sont appliqués, ensemble ou consécutivement, le cas échéant sous forme de solutions sur un diélectrique - le cas échéant revêtu par d'autres couches - d'un corps d'électrode poreux et sont polymérisés par oxydation chimique à des températures de -10°C à 250°C, ou **en ce que** des précurseurs pour la préparation de polymères conductibles et des contre-ions sont polymérisés, le cas échéant à partir de la solution, par une polymérisation électrochimique à des températures de -78°C to 250°C sur un diélectrique - le cas échéant revêtu par d'autres couches - d'un corps d'électrode poreux et on applique, le cas échéant après l'application d'autres couches sur le corps de condensateur, la couche contenant au moins un anion polymère et au moins une polyaniline le cas échéant substituée et / ou un polythiophène avec des unités répétitives de formule générale (I), (II) ou des unités répétitives des formules générales (I) et (II),

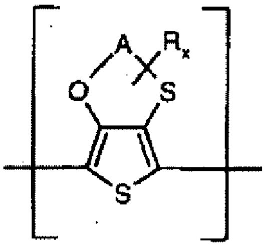

(I)

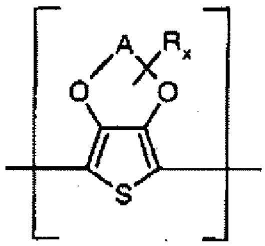

(II)

où

A, R et x ont la signification mentionnée dans la revendication 1 ou 8,
et au moins un liant organique polymère à partir d'une dispersion contenant au moins un anion polymère et au moins une polyaniline le cas échéant substituée et / ou au moins un polythiophène avec des unités répétitives de formule générale (I), (II) ou des unités répétitives des formules générales (I) et (II) et au moins un liant organique polymère.

18. Procédé selon la revendication 17, **caractérisé en ce qu'**on utilise comme précurseurs pour la préparation de polymères conductibles des thio-phènes, des pyrroles ou des anilines le cas échéant substitué (e) s.

19. Procédé selon la revendication 17 ou 18, **caractérisé en ce qu'**on utilise comme précurseurs pour la préparation de polymères conductibles du 3,4-éthylènedioxythiophène.

20. Procédé selon au moins l'une quelconque des revendications 17 à 19, **caractérisé en ce qu'**on utilise comme oxydant des peroxodisulfates de métal alcalin ou d'ammonium, du peroxyde d'hydrogène, des perborates de métal alcalin, des sels de fer (III) d'acides organiques, des sels de fer (III) d'acides inorganiques ou des sels de fer (III) d'acides inorganiques qui présentent des radicaux organiques.

21. Procédé selon au moins l'une quelconque des revendications 17 à 20, **caractérisé en ce que** l'électrolyte solide est lavé après la polymérisation et le cas échéant après séchage avec des solvants appropriés.

22. Procédé selon au moins l'une quelconque des revendications 17 à 21, **caractérisé en ce que** la couche d'oxyde du métal est reformée par voie électrochimique après la polymérisation.

23. Procédé selon au moins l'une quelconque des revendications 17 à 22, **caractérisé en ce que** l'application et le cas échéant le séchage et le lavage de la couche polymère conductible et le reformage de la couche d'oxyde sont réalisé (e) s plusieurs fois.

24. Procédé selon au moins l'une quelconque des revendications 17 à 23, **caractérisé en ce qu'**il s'agit, pour les contre-ions, d'anions d'acides alcanesulfoniques ou cycloalcanesulfoniques monomères ou d'acides sulfoniques aromatiques ou de leurs combinaisons.

25. Procédé selon au moins l'une quelconque des revendications 17 à 24, **caractérisé en ce que** la dispersion contenant au moins un anion polymère et au moins une polyaniline le cas échéant substituée et / ou au moins un polythiophène avec des unités répétitives de formule générale (I), (II) ou des unités répétitives des formules générales (I) et (II) et au moins un liant contient comme solvant des solvants organiques, de l'eau ou leurs mélanges.

26. Procédé selon au moins l'une quelconque des revendications 17 à 25, **caractérisé en ce que** la dispersion contient des réticulants, des substances tensioactives et / ou d'autres additifs.

27. Procédé selon la revendication 26, **caractérisé en ce que** la dispersion contient comme autres additifs des composés contenant des groupes éther, lactone, amide ou lactame, des sulfones, des sulfoxydes, des sucres, des dérivés de sucre, des alcools de sucre, des dérivés de furanne et / ou des dialcools ou des polyalcools.

28. Procédé selon au moins l'une quelconque des revendications 17 à 27, **caractérisé en ce qu'**on utilise pour la préparation du corps d'électrode poreaux des poudres du matériau d'électrode présentant une charge spécifique

supérieure à 35 000 µC/g.

**29.** Utilisation de condensateurs électrolytiques selon au moins l'une quelconque des revendications 1 à 16 dans des commutateurs électroniques.

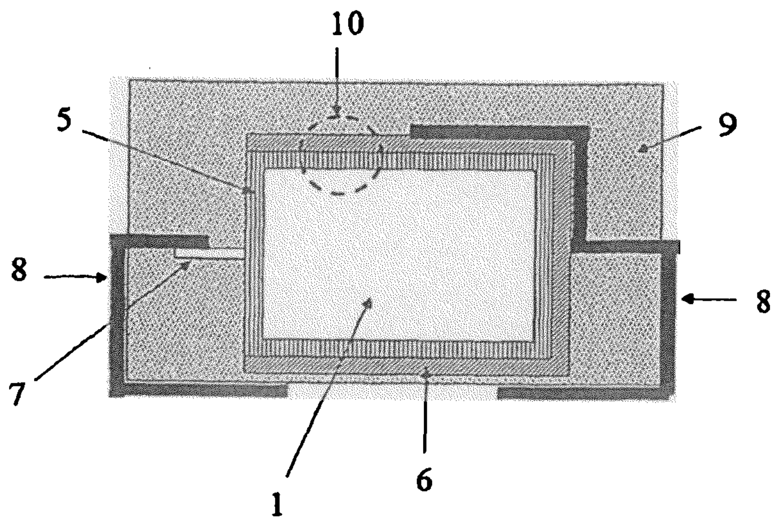


Fig. 1

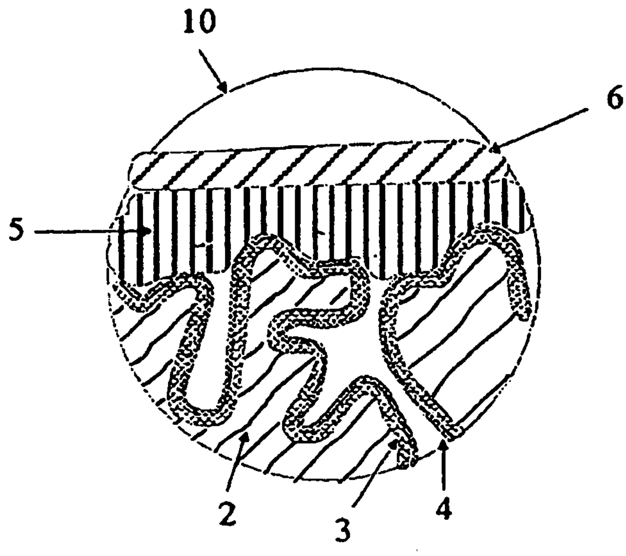


Fig. 2

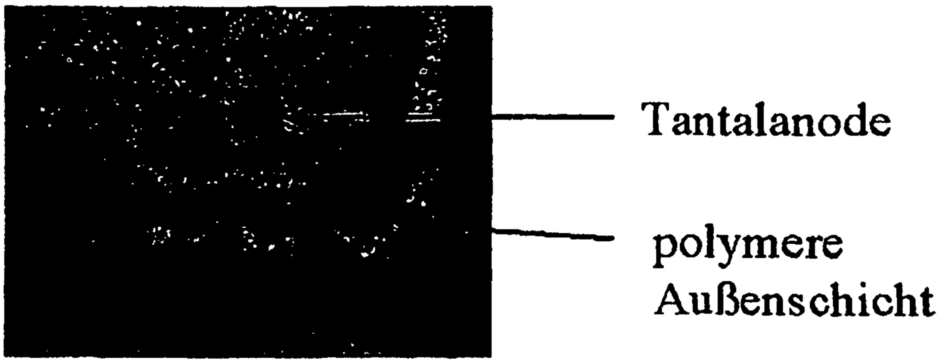


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 340512 A
- JP 2003188052 A
- JP 2001102255 A
- JP 2001060535 A
- US 6001281 P
- US 6056899 P
- DE 10324534
- EP 440957 A


### In der Beschreibung aufgeführte Nicht-Patentliteratur


- **HOUBEN WEYL.** Makromolekulare Stoffe. *Methoden der organischen Chemie,* 1987, vol. E 20, 1141
- **L. GROENENDAAL ; F. JONAS ; D. FREITAG ; H. PIELARTZIK ; J. R. REYNOLDS.** *Adv. Mater.,* 2000, vol. 12, 481-494
- **P. BLANCHARD ; A. CAPPON ; E. LEVILLAIN ; Y. NICOLAS ; P. FRÈRE ; J. RONCALI.** *Org. Lett.,* 2002, vol. 4 (4), 607-609
- Polymer Chemistry. *J. Polym. Sc.,* 1988, vol. 26, 1287
- **Y. KUDOH et al.** *Journal of Power Sources,* 1996, vol. 60, 157-163